# EUROPEAN PATENT APPLICATION

(11) **EP 4 701 323 A1**
(43) Date of publication of application: **25.02.2026**
(21) Application number: 24838420.8
(22) Date of filing: 11.05.2024
(51) Int. Cl.: H04W 76/14

(54) **SESSION MANAGEMENT METHOD AND APPARATUS**

(30) Priority: 11.07.2023 CN 202310852461
(71) Applicant: Huawei Technologies Co., Ltd., Shenzhen, Guangdong 518129 (CN)
(72) Inventor: XU, Shengfeng, Shenzhen, Guangdong 518129 (CN); LI, Yan, Shenzhen, Guangdong 518129 (CN); LI, Yongcui, Shenzhen, Guangdong 518129 (CN)
(74) Representative: Gill Jennings & Every LLP
(86) International application number: PCT/CN2024/092665
(87) International publication number: WO 2025/011161

(57) **Abstract**

Embodiments of this application provide a session management method and an apparatus. The method includes: An access network element receives a first message from a terminal device, where the first message includes an identifier of a first session and a first non-access stratum NAS message, and the first NAS message is used to request to establish or activate the first session corresponding to the identifier; and the access network element sends a second message to a first session management function network element, where the second message includes the first NAS message and an identifier of the terminal device. In this solution, the access network element may be directly connected to the first session management function network element (for example, directly connected to the first session management function network element based on a service-oriented interface), and the access network element directly exchanges a NAS message with the first session management function network element without forwarding by an AMF. This can improve flexibility of deploying a core network element, and improve management and control efficiency of a network session related procedure.

## Description

### CROSS-REFERENCE TO RELATED APPLICATIONS

This application claims priority to Chinese Patent Application No. 202310852461.0, filed with the China National Intellectual Property Administration on July 11, 2023 and entitled "SESSION MANAGEMENT METHOD AND APPARATUS", which is incorporated herein by reference in its entirety.

### TECHNICAL FIELD

This application relates to the field of communication technologies, and in particular, to a session management method and an apparatus.

### BACKGROUND

Currently, in a wireless communication system, an access and mobility management function (access and mobility management function, AMF) network element is used as a relay of non-access stratum (non-access stratum, NAS) signaling, and interaction between a terminal device or an access network device and another core network element needs to rely on forwarding by the AMF. Deployment of the core network element is not flexible. Consequently, flexibility of managing and controlling a protocol data unit (protocol data unit, PDU) session related procedure by a network is poor.

### SUMMARY

Embodiments of this application provide a session management method and an apparatus, to implement a distributed connection between an access network device and a core network element, so as to improve flexibility of managing and controlling a session related procedure by a network.

According to a first aspect, a session management method is provided. The method may be applied to an access network element or a chip in the access network element. An example in which the method is applied to the access network element is used. The method includes: The access network element receives a first message from a terminal device, where the first message includes an identifier of a first session and a first non-access stratum NAS message, and the first NAS message is used to request to establish or activate the first session corresponding to the identifier; and the access network element sends a second message to a first session management function network element, where the second message includes the first NAS message and an identifier of the terminal device.

In the foregoing solution, the access network element may be directly connected to the first session management function network element (for example, directly connected to the first session management function network element based on a service-oriented interface), and the access network element directly exchanges a NAS message with the first session management function network element without forwarding by an AMF. This can improve flexibility of deploying a core network element, and improve management and control efficiency of a network session related procedure.

In a possible design, before the access network element sends the second message to the first session management function network element, the access network element may further receive a third message from a registration function network element, where the third message includes at least one piece of information, and the registration function network element is a registration function network element with which the terminal device is registered. Correspondingly, the access network element may send the second message to the first session management function network element based on the at least one piece of information.

In this way, the access network element forwards the first NAS message to the first session management function network element based on the at least one piece of information provided by the registration function network element, so that reliability of the solution can be improved.

In a possible design, the at least one piece of information includes first information, and the first information indicates that the terminal device is located in an allowed area or is not located in a non-allowed area, or the first information indicates an allowed area and/or a non-allowed area. Correspondingly, if the terminal device is located in the allowed area or is not located in the non-allowed area, the access network element sends the second message to the first session management function network element.

In this way, the access network element forwards, to a corresponding session management function network element, a NAS message sent by the terminal device, only when the terminal device is located in the allowed area or is not located in the non-allowed area, to avoid forwarding a NAS message of a terminal device in the non-allowed area to the session management function network element.

In a possible design, the at least one piece of information includes second information; and the second information indicates an allowed message type, and correspondingly, if the allowed message type includes a message type corresponding to the first NAS message, the access network element sends the second message to the first session management function network element; or the second information indicates a non-allowed message type, and correspondingly, if the non-allowed message type does not include a message type corresponding to the first NAS message, the access network element sends the second message to the first session management function network element.

In this way, the access network element forwards only a NAS message of the allowed message type to the session management function network element, to avoid forwarding a NAS message of the non-allowed message type to the session management function network element.

In a possible design, the at least one piece of information includes third information, and the third information indicates whether the terminal device is allowed to perform access. Correspondingly, if the third information indicates that the terminal device is allowed to perform access, the access network element sends the second message to the first session management function network element.

In this way, the access network element forwards, to a corresponding session management function network element, a NAS message sent by the terminal device, only when the terminal device is allowed to access a domain, to avoid forwarding, to the session management function network element, a NAS message of a terminal device that is not allowed to perform access.

In a possible design, the third message further includes an identifier of the registration function network element, and the second message further includes the identifier of the registration function network element.

In this way, the access network element provides the identifier of the registration function network element for the first session management function network element.

In a possible design, the first NAS message is used to request to establish the first session corresponding to the identifier, the first NAS message is a session establishment request message, and the first NAS message includes the identifier of the first session. In other words, the method in this embodiment of this application may be applied to a session establishment scenario.

In a possible design, in the session establishment scenario, after the access network element receives the first message from the terminal device and before the access network element sends the second message to the first session management function network element, the access network element further sends a first request to a selection function network element. The first request is used to request to select a session management function network element for the first session. The access network element receives a first response from the selection function network element, where the first response includes identification information of the first session management function network element. Correspondingly, the access network element may send the second message to the first session management function network element based on the identification information of the first session management function network element.

In this way, the corresponding session management function network element (that is, the first session management function network element) can be selected for the first session, to ensure reliability of session establishment.

In a possible design, in the session establishment scenario, before the access network element receives the first message from the terminal device, the access network element may further send an access request message to the registration function network element, where the third message is a response message of the access request message.

In this way, the terminal device can access a network, to perform a session establishment procedure. In addition, the response message carries the at least one piece of information, so that interaction procedures can be reduced, to improve session establishment efficiency.

In a possible design, the first NAS message is used to request to activate the first session corresponding to the identifier, the first NAS message is a service request message or a session activation request message, and the first NAS message includes the identifier of the first session. In other words, the method in this embodiment of this application may be applied to a session activation scenario. It may be understood that a session needs to be activated in a service request scenario.

In a possible design, in the session activation scenario, the access network element may obtain the identification information of the first session management function network element, and the access network element sends the second message to the first session management function network element based on the identification information of the first session management function network element.

For example, the access network element may send a second request to a terminal context information repository function network element, where the second request is used to query for a session management function network element corresponding to the first session. The access network element receives a second response from the terminal context information repository function network element, where the second response includes the identification information of the first session management function network element.

In this way, the access network element may obtain the identification information of the first session management function network element from the terminal context information repository function network element, to improve reliability of the solution.

For example, the first message includes the identification information of the first session management function network element, and the access network element may obtain the identification information of the first session management function network element from the first message.

In this way, the terminal device may provide the identification information of the first session management function network element to the access network element, so that the access network element does not need to query for the session management function network element from another place, to improve interaction efficiency.

Certainly, the foregoing two manners of determining the first session management function network element are merely examples, and are not actually limited thereto.

In this way, the corresponding session management function network element (that is, the first session management function network element) can be determined for the first session, to ensure reliability of session activation.

In a possible design, in the session activation scenario, before the access network element receives the third message from the registration function network element, the access network element may further send an access request message to the registration function network element, where the access request message includes the identifier of the terminal device, and the third message is a response message of the access request message.

In this way, the terminal device can access a network, to perform a session activation procedure. In addition, the response message carries the at least one piece of information, so that interaction procedures can be reduced, to improve session establishment efficiency.

In a possible design, after the access network element receives the first message from the terminal device, the access network element sends the access request message to the registration function network element.

In other words, the terminal device may trigger an access procedure and the session activation procedure at the same time by sending the first message, so that a quantity of times that the terminal device sends a message can be reduced, and energy consumption of the terminal device can be reduced.

In a possible design, before the access network element receives the first message from the terminal device, the access network element receives a fourth message from the terminal device, where the fourth message includes a second NAS message, and the second NAS message is used to request to access a network or activate a control plane connection. Correspondingly, the access network element sends the access request message to the registration function network element based on the fourth message, where the access request message includes the second NAS message.

In other words, the terminal device first sends the fourth message, to connect to the network, and then the terminal device sends the first message after accessing the network, to activate the session. In this way, in the session activation procedure, the terminal device may no longer perform access, so that efficiency of the session activation procedure can be improved.

In a possible design, the first message includes an identifier of at least one session and at least one NAS message, the at least one NAS message is in one-to-one correspondence with the at least one session, a NAS message corresponding to the first session in the at least one session is used to request to establish or activate the first session, and the first session is any one of the at least one session. Correspondingly, the access network element sends the second message to a session management function network element corresponding to each session.

In this way, a plurality of sessions can be synchronously established or activated, and session management and control efficiency can be further improved.

According to a second aspect, a session management method is provided. The method may be applied to a first session management function network element or a chip in the first session management function network element. An example in which the method is applied to the first session management function network element is used. The method includes: The first session management function network element receives a second message from an access network element, where the second message includes a first NAS message and an identifier of a terminal device, and the first NAS message is used to request to establish or activate a first session; and the first session management function network element accepts or rejects the first NAS message based on mobility restriction information of the terminal device.

In a possible design, the first session management function network element may obtain the mobility restriction information of the terminal device from a registration function network element based on an identifier of the registration function network element, where the registration function network element is a registration function network element with which the terminal device is registered.

In a possible design, the second message further includes the identifier of the registration function network element.

In a possible design, the first session management function network element may, alternatively, obtain terminal context information of the registration function network element from a terminal context information repository function network element based on terminal context information of the terminal device. The terminal context information repository function network element stores a correspondence between the terminal context information of the registration function network element and the terminal context information of the terminal device.

In a possible design, the first session management function network element may, alternatively, obtain the mobility restriction information of the terminal device from the terminal context information repository function network element based on the terminal context information of the terminal device.

In a possible design, the mobility restriction information may include fourth information, and the fourth information indicates that the terminal device is located in an allowed area or a non-allowed area Correspondingly, when the terminal device is located in the allowed area or is not located in the non-allowed area, the first session management function network element accepts the first NAS message; otherwise, the first session management function network element rejects the first NAS message.

In a possible design, the mobility restriction information may include fifth information, and the fifth information indicates an allowed area or a non-allowed area of the terminal device. Correspondingly, the first session management function network element may determine, based on location information of the terminal device and the fifth information, whether the terminal device is located in the allowed area and/or the non-allowed area. When the terminal device is located in the allowed area or is not located in the non-allowed area, the first session management function network element accepts the first NAS message; otherwise, the first session management function network element rejects the first NAS message.

In a possible design, the second message further includes an identifier of a data network and/or an identifier of a network slice, and the fifth information specifically indicates an allowed area or a non-allowed area of a terminal device corresponding to the data network and/or the network slice.

In a possible design, the mobility restriction information includes sixth information, and the sixth information indicates an allowed radio access technology or a non-allowed radio access technology. Correspondingly, when a radio access technology of the access network element belongs to the allowed radio access technology, or the radio access technology of the access network element does not belong to the non-allowed radio access technology, the first session management function network element accepts the first NAS message; otherwise, the first session management function network element rejects the first NAS message.

According to a third aspect, a session management method is provided. The method may be applied to a registration function network element or a chip in the registration function network element. An example in which the method is applied to the registration function network element is used. The method includes: The registration function network element receives an access request message from an access network element, where the access request message is used to request to connect a terminal device to the registration function network element (or a network); and the registration function network element sends a third message to the access network element, where the third message includes at least one piece of information, and the at least one piece of information is used by the access network element to determine whether to forward a first NAS message.

In a possible design, the at least one piece of information includes but is not limited to at least one of the following:
first information, where the first information indicates that the terminal device is located in an allowed area or is not located in a non-allowed area, or the first information indicates an allowed area and/or a non-allowed area;
second information, where the second information indicates an allowed message type or a non-allowed message type; and
third information, where the third information indicates whether the terminal device is allowed to perform access.

In a possible design, the registration function network element may further determine the allowed message type or the non-allowed message type based on location information of the terminal device.

In a possible design, the registration function network element may, alternatively, send mobility restriction information of the terminal device to the first session management function network element.

The mobility restriction information includes at least one of the following:
fourth information, indicating that the terminal device is located in the allowed area or the non-allowed area;
fifth information, indicating an allowed area or a non-allowed area of the terminal device; and
sixth information, indicating an allowed radio access technology or a non-allowed radio access technology.

In a possible design, the third message, alternatively, includes an identifier of the registration function network element. Alternatively, the registration function network element sends the identifier of the registration function network element to a terminal context information repository function network element.

In a possible design, the third message is a response message of the access request message.

According to a fourth aspect, a session management method is provided. The method may be applied to a terminal device or a chip in the terminal device. An example in which the method is applied to the terminal device is used. The method includes: The terminal device generates a first message; and the terminal device sends the first message to an access network element, where the first message includes an identifier of at least one session and at least one NAS message, the at least one NAS message is in one-to-one correspondence with the at least one session, and a NAS message corresponding to each of the at least one session is used to request to establish or activate the session.

In a possible design, the first message further includes identification information of at least one session management function network element, the identification information of the at least one session management function network element is in one-to-one correspondence with the at least one session, and each of the at least one session management function network element is responsible for managing a session corresponding to identification information of the session management function network element.

In a possible design, the terminal device may further receive, form each of the at least one session management function network element, the identification information of the session management function network element.

In a possible design, before the terminal device sends the first message, the terminal device may further send a fourth message to the access network element, where the fourth message includes a second NAS message, and the second NAS message is used to request to access a network or activate a control plane connection.

According to a fifth aspect, a communication apparatus is provided. The apparatus includes a module, a unit, or a means configured to perform the method according to any one of the first aspect or the possible designs of the first aspect.

For example, the apparatus may include:
a transceiver unit, configured to: receive a first message from a terminal device, where the first message includes an identifier of a first session and a first non-access stratum NAS message, and the first NAS message is used to request to establish or activate the first session corresponding to the identifier; and send a second message to a first session management function network element, where the second message includes the first NAS message and an identifier of the terminal device.

According to a sixth aspect, a communication apparatus is provided. The apparatus includes a module, a unit, or a means configured to perform the method according to any one of the second aspect or the possible designs of the second aspect.

For example, the apparatus may include:
a transceiver unit, configured to receive a second message from an access network element, where the second message includes a first NAS message and an identifier of a terminal device, and the first NAS message is used to request to establish or activate a first session; and
a processing unit, configured to accept or reject the first NAS message based on mobility restriction information of the terminal device.

According to a seventh aspect, a communication apparatus is provided. The apparatus includes a module, a unit, or a means configured to perform the method according to any one of the third aspect or the possible designs of the third aspect.

For example, the apparatus may include:
a transceiver unit, configured to: receive an access request message from an access network element, where the access request message is used to request to connect a terminal device to a registration function network element (or a network) in which the apparatus is located; and send a third message to the access network element, where the third message includes at least one piece of information, and the at least one piece of information is used by the access network element to determine whether to forward a first NAS message.

According to an eighth aspect, a terminal device is provided. The terminal device includes a module, a unit, or a means configured to perform the method according to any one of the fourth aspect or the possible designs of the fourth aspect.

For example, the terminal device may include:
a processing unit, configured to generate a first message; and
a transceiver unit, configured to send a first message to an access network element, where the first message includes an identifier of at least one session and at least one NAS message, the at least one NAS message is in one-to-one correspondence with the at least one session, and a NAS message corresponding to each of the at least one session is used to request to establish or activate the session.

According to a ninth aspect, a communication apparatus is provided. The communication apparatus includes a processor. The processor is coupled to a memory, the memory is configured to store a program or instructions, and when the program or the instructions are executed by the processor, the communication apparatus is caused to perform the method according to any one of the first aspect or the possible designs of the first aspect, the second aspect or the possible designs of the second aspect, the third aspect or the possible designs of the third aspect, or the fourth aspect or the possible designs of the fourth aspect.

According to a tenth aspect, a computer-readable storage medium is provided. The storage medium stores a computer program or instructions. When the computer program or the instructions are executed by a communication apparatus, the method according to any one of the first aspect or the possible designs of the first aspect, the second aspect or the possible designs of the second aspect, the third aspect or the possible designs of the third aspect, or the fourth aspect or the possible designs of the fourth aspect is implemented.

According to an eleventh aspect, a chip is provided. The chip includes a processor, and the processor is configured to execute program instructions in a memory, to perform the method according to any one of the first aspect or the possible designs of the first aspect, the second aspect or the possible designs of the second aspect, the third aspect or the possible designs of the third aspect, or the fourth aspect or the possible designs of the fourth aspect.

According to a twelfth aspect, a computer program product including instructions is provided. The computer program product stores the instructions. When the instructions run on a computer, the computer is caused to perform the method according to any one of the first aspect or the possible designs of the first aspect, the second aspect or the possible designs of the second aspect, the third aspect or the possible designs of the third aspect, or the fourth aspect or the possible designs of the fourth aspect.

According to a thirteenth aspect, a communication system is provided. The communication system includes the communication apparatus according to the fifth aspect, the communication apparatus according to the sixth aspect, the communication apparatus according to the seventh aspect, and the communication apparatus according to the eighth aspect.

For technical effects that can be achieved in the second aspect to the thirteenth aspect, refer to descriptions of technical effects that can be achieved in the corresponding design solutions in the first aspect. Details are not described herein again in this application.

### BRIEF DESCRIPTION OF DRAWINGS

FIG. 1 is a diagram of a network architecture of a 5G communication system;
FIG. 2 is a diagram of an example of a PDU session establishment procedure;
FIG. 3 is a diagram of an example of a service request procedure;
FIG. 4 is a diagram of a network architecture of a communication system to which an embodiment of this application is applicable;
FIG. 5 is a flowchart of a session management method according to an embodiment of this application;
FIG. 6 is a flowchart of a network element selection method according to an embodiment of this application;
FIG. 7 is a flowchart of a session establishment method according to an embodiment of this application;
FIG. 8 is a flowchart of a service request method according to an embodiment of this application;
FIG. 9 is a flowchart of a session management method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

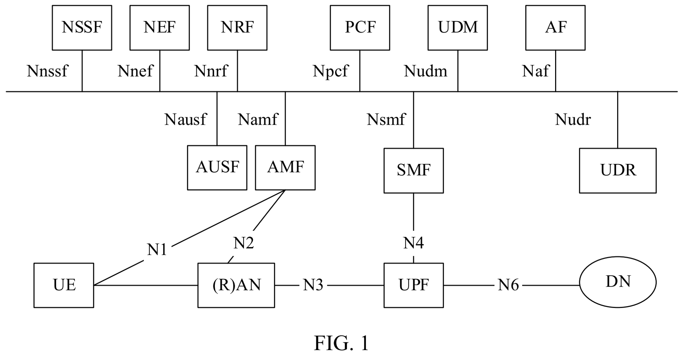

FIG. 1 is a diagram of a network architecture of a 5th generation (5th Generation, 5G) communication system. Network functions and entities included in the system mainly include: a terminal device (user equipment, UE), a radio access network ((radio) access network, (R)AN) element, a user plane function (UPF) network element, a data network (Data Network, DN), an access and mobility management function (access and mobility management function, AMF) network element, a session management function (session management function, SMF) network element, a policy control function (policy control function, PCF) network element, an application function (application function, AF) network element, a network slice selection function (network slice selection function, NSSF) network element, an authentication server function (authentication server function, AUSF) network element, a unified data management (unified data management, UDM) network element, a network exposure function (network exposure function, NEF) network element, a network repository function (network repository function, NRF) network element, a unified data repository function (unified data repository, UDR) network element, and the like.

It may be understood that, in this specification, for ease of description, a name of each network function or entity may be represented by an English abbreviation of the network function or entity. For example, the session management function network element may be represented by an SMF or an SMF network element.

FIG. 1 shows interaction relationships between network functions and entities and corresponding interfaces. For example, the UE and the AMF may interact with each other through an N1 interface, and the (R)AN and the AMF may interact with each other through an N2 interface. An exchanged message is referred to as an N2 message (Message), and interfaces between network elements such as the AMF, the SMF, the PCF, the AF, the NSSF, the AUSF, the UDM and the UDR are implemented by using service-oriented interfaces.

The UE, the (R)AN, the UPF, and the DN are usually referred to as data plane network functions and entities. Transmission may be performed on user data traffic by using a PDU session (Protocol Data Unit Session) established between the UE and the DN, and the traffic may pass through two network function entities: the (R)AN and the UPF. Other parts are referred to as control plane network functions and entities, and are mainly responsible for functions such as authentication and authorization, registration management, session management, mobility management, and policy control, to implement reliable and stable transmission of user-layer traffic. A user plane is used to carry service data, and a control plane is used to carry a signaling message.

The UE may also be referred to as a terminal, user equipment, a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. In internet of vehicles communication, a communication terminal mounted on a vehicle is a terminal device, and a road side unit (RSU, Road Side Unit) may also be used as a terminal device. A specific technology and a specific device form that are used by the terminal device are not limited in embodiments of this application.

The (R)AN sometimes may also be referred to as an access network device, an access network node, a (R)AN node, a (R)AN entity, an access node, a (R)AN network element, or the like, to help the terminal device implement radio access.

The access network device is, for example, a base station (base station, BS), or includes a base station, a radio resource management device configured to control the base station, and the like. The base station may include an evolved NodeB (NodeB, eNB, or e-NodeB, evolved NodeB) in a long term evolution (long term evolution, LTE) system or a long term evolution-advanced (long term evolution-advanced, LTE-A) system; or may include a next generation NodeB (next generation NodeB, gNB), a next generation evolved NodeB (next generation evolved NodeB, ngeNB), or an enhanced next generation NodeB (enhanced next generation NodeB, en-gNB) in a 5th generation (5th generation, 5G) mobile communication technology new radio (new radio, NR) system; or may include a central unit (central unit, CU) and a distributed unit (distributed unit, DU) in a cloud radio access network (cloud radio access network, Cloud (R)AN) system. This is not limited in embodiments of this application.

In a possible scenario, a plurality of (R)AN nodes collaborate to assist a terminal in implementing radio access, and different (R)AN nodes separately implement some functions of the base station. For example, the (R)AN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU) processing unit, or a remote radio head (remote radio head, RRH).

In different systems, the CU (or the CU-CP and the CU-UP), the DU, or the RU may also have different names, but a person skilled in the art may understand meanings thereof. For example, in an O(R)AN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by a software module, a hardware module, or a combination of a software module and a hardware module.

The AMF is mainly responsible for signaling processing, for example, functions such as access control, mobility management, attachment and detachment, and gateway selection. When providing a service for a session in the terminal device, the AMF provides a control plane storage resource for the session to store a session identifier, an SMF identifier associated with the session identifier, and the like.

The SMF is responsible for user plane network element selection, user plane network element redirection, internet protocol (internet protocol, IP) address assignment, bearer establishment, modification, and release, and QoS control.

The UPF is responsible for forwarding and receiving user data in the terminal device. The UPF may receive the user data from the data network, and transmit the user data to the terminal device through the access network device; or the UPF may receive the user data from the terminal device through the access network device, and forward the user data to the data network. A transmission resource and a scheduling function that are used by the UPF to provide a service for the terminal device are managed and controlled by the SMF.

The NEF mainly supports secure interaction between a 3GPP network and a third-party application.

The application function (Application Function, AF) mainly supports interacting with a 3GPP core network to provide a service, for example, affecting a data routing decision or a policy control function, or providing some third-party services for a network side.

The PCF is responsible for providing policy control decisions, providing policy rules for control plane functions, and providing flow-based charging control functions.

The NSSF is mainly responsible for selecting a network slice, and determining, based on slice selection assistance information, subscription information, and the like of the UE, a network slice instance that the UE is allowed to access.

The UDM is mainly responsible for management of subscription data of the UE, including storage and management of a UE identifier, access authorization of the UE, and the like.

The AUSF supports authentication for 3GPP access and non-3GPP access.

The NRF supports registration and discovery of a network function.

The UDR stores and obtains subscription data used by the UDM and the PCF.

Certainly, the network elements in FIG. 1 are merely some examples, and may actually further include another network element.

It can be learned from FIG. 1 that the access and mobility management function (access and mobility management function, AMF) is used as a relay of non-access stratum (non-access stratum, NAS) signaling, and interaction between the terminal device or the access network device and another core network element needs to rely on forwarding by the AMF.

The following uses a PDU session establishment procedure and a service request procedure as examples.

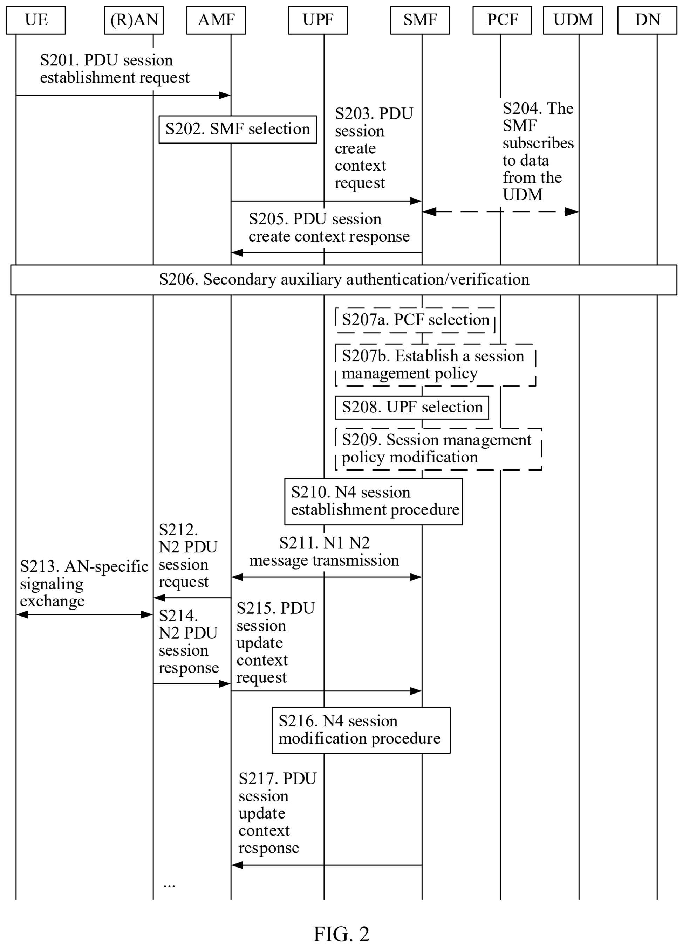

FIG. 2 is a diagram of an example of a PDU session establishment procedure. The following steps are included.

S201. UE->AN->AMF: The UE sends a NAS message to the AMF, where the message may include: single network slice selection information (single network slice selection information, S-NSSAI(s)), a data network name (data network name, DNN), a PDU session identifier (PDU Session ID), a request type (Request type), an old PDU session identifier (Old PDU Session ID), and an N1 session management (session management, SM) container (container) (where the container includes a PDU session establishment request (PDU Session Establishment Request)).

Specifically, to establish a new PDU session, the UE generates a new PDU session ID. The UE initiates a UE requested PDU session establishment (Request PDU Session Establishment) procedure by transferring the N1 SM container that includes the PDU Session Establishment Request and that is of the NAS message. The PDU Session Establishment Request may include a request PDU type (Request PDU Type), a requested service and session continuity (service and session continuity, SSC) mode (Requested SSC mode), protocol configuration options (Protocol Configuration Options), and a session management PDU data network request container (SM PDU DN Request Container).

S202. The AMF selects an SMF, and allocates the SMF to manage the PDU session.

SMF selection is classified into two types: The AMF includes available SMF information (for example, local configurations); and when there is no available SMF information, an SMF selection function is used to select the SMF.

S203. AMF->SMF: The AMF sends a PDU session create context request (SMF Nsmf_PDUSession _CreateSMContext Request) message.

If the AMF and the SMF do not have an association with the PDU Session ID provided by the UE (for example, the Request Type indicates that the PDU Session establishment request is an initial request (Initial Request)), the AMF invokes Nsmf_PDUSession_CreateSMContext Request. If the AMF and the SMF have an association with the PDU Session ID provided by the UE (for example, the Request Type indicates an existing PDU session (Existing PDU Session)), the AMF invokes a PDU session update context request (Nsmf_PDUSession_UpdateSMContext Request).

S204. SMF<->UDM: The SMF subscribes to data from the UDM.

S205. The SMF sends a PDU session create context response (Nsmf_PDUSession_CreateSMContext Response) or a PDU session update context response (Nsmf_PDUSession_UpdateSMContext Response) to the AMF based on the request received in S203.

S206. A network performs secondary auxiliary authentication/verification.

S206 is an optional step, or S207a may be directly performed after S205 is performed.

S207a. The SMF selects a PCF.

S207b. SMF<->PCF: Establish a session management policy.

S208. The SMF selects a UPF.

S209. SMF<->PCF: The SMF may perform a session management policy modification (Session Management Policy Modification) procedure to report some events to the previously subscribed PCF.

S209 is an optional step, or S210 may be directly performed after S208 is performed.

S210. SMF<->UPF: N4 session establishment (N4 Session Establishment) procedure. If the Request Type is the Initial Request, the SMF initiates the N4 Session Establishment procedure; otherwise, the SMF initiates an N4 session modification (N4 Session Modification) procedure.

S211. SMF->AMF: N1N2 message transmission (Namf_Communication_N1N2MessageTransfer).

The message may include a PDU Session ID, an Access Type, N2 SM information (a PDU Session ID, a QFI(s), a QoS profile (Profile(s)), CN Tunnel Info, S-NSSAI, a Session-AMBR, and a PDU Session Type), and an N1 SM container (PDU Session Establishment Accept (a QoS Rule(s), a selected SSC mode, S-NSSAI, an allocated IPv4 address, an interface identifier, a Session-AMBR, and a selected PDU Session Type)).

The N2 SM information carries information forwarded by the AMF to the (R)AN. The CN Tunnel Info corresponds to a core network address of an N3 tunnel (Tunnel) of the PDU Session, the QoS profile, and the corresponding QFI. The PDU Session ID indicates to the UE an association, for the UE, between an AN resource and the PDU Session, and an association between the PDU Session and the S-NSSAI and the DNN.

The N1 SM container includes information provided by the AMF for the UE, including the PDU session establishment accept (PDU Session Establishment Accept).

S212. AMF->(R)AN: N2 PDU session request (N2 PDU Session Request).

The request may include the N2 SM information, a NAS message (the PDU Session ID and the N1 SM container (the PDU Session Establishment Accept)).

The AMF sends, to the (R)AN, the NAS message including the PDU Session ID and the PDU Session Establishment Accept for the UE and the N2 SM information received from the SMF in the N2 PDU Session Request. The N2 SM information includes the CN Tunnel Info.

S213. (R)AN->UE: The (R)AN initiates AN-specific signaling exchange with the UE, where the exchange is related to information received from the SMF.

S214. (R)AN->AMF: N2 PDU session response (N2 PDU Session Response).

The response may include the PDU Session ID, a cause (Cause), N2 SM information (the PDU Session ID, AN Tunnel Info, a list of accepted/rejected QFI(s) (List of accepted/rejected QFI(s))), and the like. The AN Tunnel Info corresponds an access network address of the N3 Tunnel of the PDU session.

S215. AMF->SMF: Nsmf_PDUSession_UpdateSMContext Request.

The request may include the N2 SM information and the Request Type. The AMF forwards the N2 SM information received from the (R)AN to the SMF.

S216. SMF<->UPF: N4 Session Modification procedure.

The SMF sends an N4 session modification request (N4 Session Modification Request) to the UPF, and the SMF provides the AN Tunnel info and a corresponding forwarding rule for the UPF. The UPF sends an N4 session modification response (N4 Session Modification Response) to the SMF.

S217. SMF->AMF: Nsmf_PDUSession_UpdateSMContext Response (Cause).

After this, the SMF may subscribe to a UE mobility event notification from the AMF by invoking an event exposure subscription (Namf_EventExposure_Subscribe) service operation. For a local area data network (local area data network, LADN), the SMF subscribes to an event notification of UE moving into or out of an LADN service domain. The AMF forwards a related event subscribed by the SMF.

It can be learned from steps S201 to S203, S205, S211 and S212, and S214 and S215, and other steps that interaction between the (R)AN and the SMF relies on forwarding by the AMF.

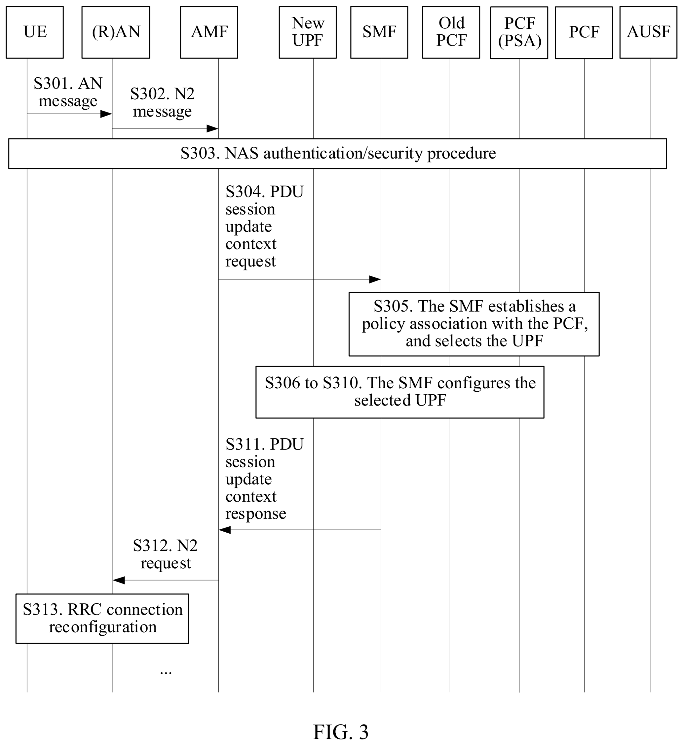

FIG. 3 is a diagram of an example of a service request procedure. The following steps are included.

S301. UE->AN: Access network message (AN Message).

The message may include: access network parameters (AN parameters) and a service request (Service Request). The Service Request may include:
a list of PDU sessions to be activated (List Of PDU Sessions To Be Activated), a list of allowed PDU sessions (List Of Allowed PDU Sessions), security parameters (security parameters), a PDU session status (PDU Session status), and a 5G-system architecture evolution temporary mobile identity (system architecture evolution-TMSI, S-TMSI).

If a service request is triggered by user data transmission, the UE needs to reactivate the PDU session and provides the list of PDU sessions to be activated. No PDU session needs to be provided if only the service request is triggered by signaling. The PDU session status (PDU Session status) identifies all available PDU sessions in the UE. If the UE is not in an LADN area, the UE may not trigger a PDU session request procedure corresponding to the LADN. For UE in a connected (CM-CONNECTED) state, the Service Request includes only the list of PDU sessions to be activated and the list of allowed PDU sessions. In an NG-(R)AN scenario, the AN parameters include the 5G-S-TMSI, a selected PLMN ID (Selected PLMN ID), and an establishment cause (Establishment cause).

The 5G-S-TMSI is a shortened form of a 5G-globally unique temporary identity (globally unique temporary identity, GUTI). The 5G-S-TMSI is introduced to reduce a size of an air interface signaling message overheads and improve air interface efficiency.

5G-GUTI: A purpose of using the 5G-GUTI in the 5G system is to reduce display of a permanent identifier of the UE during communication and improve security.

The 5G-GUTI includes two parts: (1) A first part, GUAMI, indicates an AMF that allocates the 5G-GUTI, and (2) a second part, 5G-TMSI, indicates a unique identifier of the UE in the AMF.

S302. AN->AMF: N2 message, including N2 parameters (N2 parameters) and a service request (Service Request).

In the NG-(R)AN scenario, the N2 parameters include the 5G-S-TMSI, a Selected PLMN ID, location information and an establishment cause (Location information and Establishment cause), and a UE context request (UE Context Request).

If the UE is in a CM-idle (IDLE) state, the (R)AN obtains the 5G-GUTI in an RRC procedure. The (R)AN selects an AMF based on the 5G-GUTI. The location information is related to a cell on which the UE camps. Based on the PDU Session status, the AMF initiates a PDU session release (PDU Session Release) procedure in a network to release a PDU session indicated by the UE as available (available).

S303. If the Service Request is not sent with integrity protection or integrity protection check fails, the AMF initiates a NAS authentication/security procedure. If the UE in the CM-IDLE state triggers the service request only for establishing a signaling connection, after the signaling connection between the network and the UE is successfully established, steps S304 to S310, step S313, and the like are skipped.

S304. AMF->SMF: Nsmf_PDUSession_UpdateSMContext Request.

The request may include: PDU Session IDs, an operation type (Operation Type), user location information (UE location information), an access type (Access Type), a radio access technology type (RAT Type), UE presence in an LADN service area (UE presence in an LADN service area), and an indication of an access type that can be changed (Indication of Access Type can be changed).

The AMF determines PDU sessions to be reactivated and sends an Nsmf_PDUSession_UpdateSMContext request to SMFs related to these PDU sessions, indicating a cause as "user plane resource creation". The Nsmf_PDUSession_UpdateSMContext request is invoked when the UE identifies the List Of PDU Sessions To Be Activated in service request information. This procedure is triggered by the SMF, but the PDU session identified by the UE is different from the PDU session that triggers the procedure. The AMF determines PDU sessions to be activated. This procedure is triggered by the SMF, but a current UE location is outside a valid area provided by the SMF in the N2 information. The AMF determines PDU sessions to be activated.

The AMF may receive a Service Request to establish a new NAS signaling connection and trigger release of an old NAS signaling connection. For the PDU session identified as to-be-reactivated, the AMF requests the SMF to activate the PDU session immediately. For a PDU session identified with an activated N3 user plane, if the PDU session is not in the list of PDU sessions to be reactivated, the AMF requests the SMF to deactivate the PDU session.

S305. The SMF establishes a policy association with a PCF, and selects a UPF.

S306 to S310. The SMF configures the selected UPF.

S311. SMF->AMF: Nsmf_PDUSession_UpdateSMContext Response.

The response includes: N2 SM information, an N1 SM Container, and a Cause. The N2 SM information includes: a PDU Session ID, a QFI(s), a QoS profile(s), CN N3 Tunnel Info, S-NSSAI, user plane security enforcement (User Plane Security Enforcement), a UE integrity protection maximum data rate (UE Integrity Protection Maximum Data Rate), a redundancy sequence number (redundancy sequence number, RSN), and a PDU session pair identifier (PDU Session Pair ID).

S312. AMF->(R)AN: N2 request (N2 Request)

The request includes: N2 SM information received from the SMF (N2 SM information received from the SMF), a security context (security context), a mobility restriction list (Mobility Restriction List), a UE-maximum bit rate (Aggregate Maximum Bit Rate, AMBR), a List of UE-slice-maximum bit rates (Maximum Bit Rate, MBR) (List of UE-Slice-MBR(s)), MM NAS service accept (Service Accept), a list of recommended cells/TAs/NG-(R)AN node identifiers (list of recommended cells/TAs/NG-(R)AN node identifiers), a UE radio capability (UE Radio Capability), core network assistance information (Core Network Assistance Information), tracing requirements (Tracing Requirements), and a UE radio capability identifier (UE Radio Capability ID).

S313. (R)AN->UE: The NG-(R)AN performs RRC connection reconfiguration.

In steps S302 to S304, S311 and S312, and other steps, interaction between the (R)AN and the SMF relies on forwarding by the AMF. To resolve a problem that flexibility of managing and controlling a PDU session related procedure is poor due to inflexible deployment of the foregoing core network element, technical solutions in embodiments of this application are provided, so that a distributed connection between the access network device and the core network element can be implemented, to improve flexibility of managing and controlling the PDU session related procedure by the network.

Embodiments of this application may be applied to a wireless mobile cellular network, including a 6th generation (6th generation, 6G) mobile communication system and an evolved system thereof.

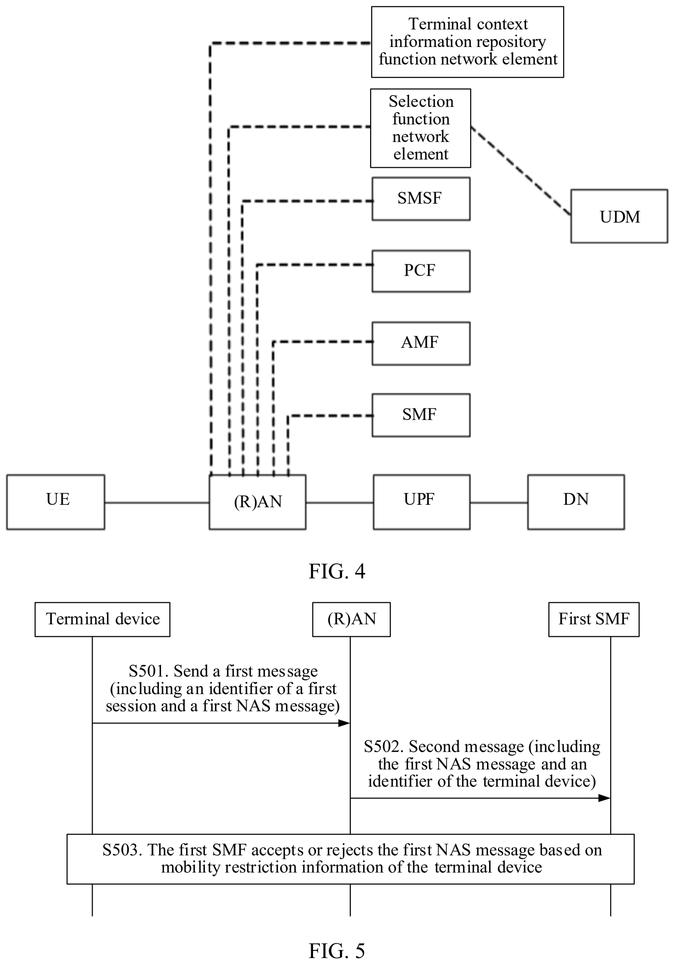

FIG. 4 is a diagram of a network architecture of a communication system to which an embodiment of this application is applicable. The network architecture may include some or all of a plurality of devices or network elements below: a terminal device, an access network device, a registration function network element, an SMF network element (an SMF for short), a UPF network element (a UPF for short), a PCF network element (a PCF for short), a short message service function (short message service function, SMSF) network element (an SMSF for short), a UDM network element (a UDM for short), a selection function network element, and a terminal context information repository function network element.

There are interfaces between the access network device and the registration function network element, the SMF, the UPF, the PCF, the SMSF, the selection function network element, and the terminal context information repository function network element, to implement distributed connections and flexible deployment of a core network element. For example, if the network architecture is a network architecture by introducing a service-oriented (R)AN, the interfaces between the access network device and the registration function network element, the SMF, the UPF, the PCF, the SMSF, the selection function network element, and the terminal context information repository function network element may all be service-oriented interfaces.

The registration function network element is configured to provide an access management function or a registration management function for a user (or the terminal device). The registration function network element may also be referred to as an access management function network element. In a possible implementation, the registration function network element is an AMF.

The selection function network element is configured to select a core network element for the terminal device. The core network element in a network may be registered with the selection function network element, so that the selection function network element may select a target core network element for the terminal device from registered core network elements. The selection function network element may obtain subscription data of the terminal device from the UDM network element, and select the target core network element for the terminal device based on registration information of the core network element and the subscription data. The selection function network element may also be referred to as a network element selection function network element. In a possible implementation, the selection function network element is an NRF.

The terminal context information repository function network element is configured to store context information (UE context information) of the terminal device, including context information generated when another core network element manages the terminal device. For example, the terminal context information repository function network element is configured to store a correspondence between a temporary identifier and a permanent identifier of the terminal device. After generating or obtaining the correspondence between the temporary identifier and the permanent identifier of the terminal device, the registration function network element may store the correspondence between the temporary identifier and the permanent identifier of the terminal device in the terminal context information repository function network element. The terminal context information repository function network element may also be referred to as an identifier repository function network element. For another example, the terminal context information repository function network element is configured to store identification information of a session and identification information of a session management function network element that is responsible for managing the session. In a possible implementation, the terminal context information repository function network element is a UDR or an unstructured data storage function (unstructured data storage function, UDSF).

For other network elements in FIG. 4, refer to the foregoing descriptions. Details are not described herein again.

FIG. 5 is a flowchart of a session management method according to an embodiment of this application. For example, the method is applied to the network architecture shown in FIG. 4. The method includes steps S501 to S503.

S501. A terminal device sends a first message, and a (R)AN receives the first message, where the first message includes an identifier of a first session and a first NAS message.

The first message may be an access network (access network, AN) message.

The first NAS message is related to the first session. For example, the first NAS message is used to request to establish the first session. In other words, this embodiment of this application may be applied to a session establishment scenario. Alternatively, the first NAS message is used to request to activate the first session. In other words, this embodiment of this application may be applied to a session activation scenario (for example, a service request scenario in which a session needs to be activated).

The first session may be a PDU session, a computing session, an artificial intelligence (artificial intelligence, AI) session, or the like. This is not limited in this application. The computing session is a session related to a computing task, and the AI session is a session related to an AI task. For ease of description, the PDU session is mainly used as an example in this specification.

It may be understood that the (R)AN may not parse (or perceive) content of a NAS message. Therefore, the first message includes the identifier of the first session, so that the (R)AN can determine that the first NAS message is related to the first session, and further determine to forward the first NAS message to an SMF that manages the first session (or an SMF corresponding to the first session). For ease of description, the SMF that manages the first session is referred to as a first SMF in the following.

In some embodiments, the RAN may directly forward the first NAS message to the first SMF (for example, perform step S502). In some other embodiments, the (R)AN may first determine whether the (R)AN is capable of forwarding (or can or needs to forward) the first NAS message to the SMF, and when determining that the (R)AN is capable of forwarding (or can or needs to forward) the first NAS message to the SMF, forward the first NAS message to the first SMF (for example, perform step S502).

In a possible implementation, when one or more of the following conditions are satisfied, the (R)AN is capable of forwarding (or can or needs to forward) the first NAS message to the first SMF.
(1) The terminal device is located in an allowed area (allowed area) and/or is not located in a non-allowed area (non-allowed area).

In a possible example, the allowed area and/or the non-allowed area are/is service area restrictions/a service area restriction (Service Area Restriction) in mobility restriction (Mobility Restrictions) information. When the terminal device is in the allowed area, the terminal device is allowed to initiate a PDU session related service. When the terminal device is in the non-allowed area, the terminal device is not allowed to initiate a PDU session related service. Therefore, the terminal device is allowed to initiate the PDU session related service only when the terminal device is located in the allowed area and/or is not located in the non-allowed area. Therefore, the (R)AN can forward the first NAS message to the first SMF, to perform a first session related procedure (for example, an establishment procedure or an activation procedure of the first session).

In a specific implementation, the (R)AN may determine, based on first information, whether the terminal device is located in the allowed area (allowed area) or the non-allowed area (non-allowed area). The first information may directly indicate a result of whether the terminal device is located in the allowed area or the non-allowed area. For example, the first information indicates that the terminal device is located in the allowed area or is not located in the non-allowed area, or the first information may indicate the allowed area and/or the non-allowed area. The (R)AN determines, based on location information of the terminal device and the first information, whether the terminal device is located in the allowed area or the non-allowed area.

In another possible example, a DNN/S-NSSAI is distinguished in the service area restriction. When the terminal device is in an allowed area corresponding to the DNN/S-NSSAI, the terminal device is allowed to initiate a session corresponding to the DNN/S-NSSAI. When the terminal device is in a non-allowed area corresponding to the DNN/S-NSSAI, the terminal device is not allowed to initiate a session corresponding to the DNN/S-NSSAI. The first message includes session attribute information such as the DNN/S-NSSAI. Therefore, the terminal device is allowed to initiate the session corresponding to the DNN/S-NSSAI, only when the terminal device is located in the allowed area corresponding to DNN/S-NSSAI and/or is not located in the non-allowed area. Therefore, the (R)AN can forward the first NAS message to the first SMF, to perform the first session related procedure (for example, the establishment procedure or the activation procedure of the first session).

In a specific implementation, the (R)AN may determine, based on first information, whether the terminal device is located in the allowed area (allowed area) or the non-allowed area (non-allowed area) corresponding to the DNN/S-NSSAI. The first information may directly indicate a result of whether the terminal device is located in the allowed area or the non-allowed area corresponding to the DNN/S-NSSAI. For example, the first information indicates that the terminal device is located in the allowed area corresponding to the DNN/S-NSSAI or is not located in the non-allowed area. Alternatively, the first information may indicate the allowed area and/or the non-allowed area corresponding to the DNN/S-NSSAI. The (R)AN determines, based on location information of the terminal device and the first information, whether the terminal device is located in the allowed area or the non-allowed area corresponding to the DNN/S-NSSAI.

(2) An allowed message type includes a message type corresponding to the first NAS message (or a message type corresponding to the first NAS message is an allowed message type); or a non-allowed message type does not include a message type corresponding to the first NAS message (or a message type corresponding to the first NAS message is not a non-allowed message type). In other words, the (R)AN may forward a NAS message of the allowed message type, and does not forward a NAS message of the non-allowed message type.

The allowed message type may be specifically an allowed NAS message type. The non-allowed message type is specifically a non-allowed NAS message type. This is not limited in this application.

For example, a message type of a NAS message includes but is not limited to a session management non-access stratum (SM NAS message) message and a policy non-access stratum (Policy NAS message) message. The allowed message type and/or the non-allowed message type may be set based on a requirement. For example, the SM NAS message is of the allowed message type, and the Policy NAS message is of the non-allowed message type; or the SM NAS message is of the non-allowed message type, and the Policy NAS message is of the allowed message type. This is not specifically limited in this embodiment of this application.

In a specific implementation, the (R)AN may determine, based on second information, whether the message type corresponding to the first NAS message is the allowed message type or the non-allowed message type. The second information may directly indicate whether the message type corresponding to the first NAS message is the allowed message type or the non-allowed message type. For example, the second information indicates that the message type corresponding to the first NAS message is the allowed message type or the message type corresponding to the first NAS message is not the non-allowed message type. Alternatively, the second information may indicate the allowed message type and/or the non-allowed message type. The (R)AN determines, based on the allowed message type and/or the non-allowed message type, whether the message type corresponding to the first NAS message is the allowed message type or the non-allowed message type.

Optionally, the first message includes a message type of the first NAS message.

In some embodiments, the allowed message type and/or the non-allowed message type may be associated with the allowed area and/or the non-allowed area. The (R)AN or the AMF may determine the allowed message type or the non-allowed message type based on location information of the terminal device. For example, when determining, based on the location information of the terminal device, and the allowed area and/or the non-allowed area, that the terminal device is in the non-allowed area, the (R)AN or the AMF determines that the SM NAS message is of the allowed message type and the Policy NAS message is of the non-allowed message type. In other words, the (R)AN may forward the SM NAS message to the SMF, and the (R)AN cannot forward the Policy NAS message to the SMF. Certainly, this is merely an example, and is not actually limited thereto.

(3) The terminal device is allowed to perform access.

That the terminal device is allowed to perform access may mean that the terminal device is allowed to access the network, or is allowed to access the AMF, or is allowed to access another network element. That the terminal device is allowed to perform access may be replaced with that the terminal device is allowed to establish a session service.

In an implementation, the (R)AN may determine, based on third information, whether the terminal device is allowed to perform access. The third information may directly indicate a result of whether the terminal device is allowed to perform access. For example, the third information indicates that the terminal device is allowed to perform access. Alternatively, the third information is reference information used to determine whether the terminal device is allowed to perform access. For example, the third information may include radio access technology (radio access technology, RAT) restriction information, and the RAT restriction information indicates a radio access technology that is allowed to be used when the terminal device accesses the network, for example, 3GPP access. The (R)AN may determine, based on the third information and the radio access technology used by the terminal device (for example, the terminal device performs access through the (R)AN, and a radio access technology corresponding to the (R)AN is the 3GPP access), whether the terminal device is allowed to perform access. Certainly, the RAT restriction information herein is merely an example. Actually, the third information may further include other content, for example, an allowed area and/or a non-allowed area (when located in the allowed area or not located in the non-allowed area, the terminal device is allowed to perform access). This is not limited in this embodiment of this application.

In another implementation, that the terminal device is allowed to perform access may be replaced with that the terminal device is allowed to establish the session service. The (R)AN may determine, based on third information, whether the terminal device is allowed to establish the session service. The third information may directly indicate a result of whether the terminal device is allowed to establish the session service. For example, the third information indicates that the terminal device is allowed to establish the session service. Alternatively, the third information is reference information used to determine whether the terminal device is allowed to establish the session service. For example, the third information may include S-NSSAI restriction information. The S-NSSAI restriction information indicates information about a slice that is allowed to be accessed for the terminal device or information about a slice that is not allowed to be accessed for the terminal device. The (R)AN may determine, based on the third information and the S-NSSAI carried in the first message, whether the terminal device is allowed to establish the session service. For example, if the S-NSSAI carried in the first message belongs to the information about the slice that is allowed to be accessed or does not belong to the information about the slice that is not allowed to be accessed, the (R)AN determines that the terminal device is allowed to establish the session service.

It may be understood that the (R)AN may determine, after receiving the first message, whether the (R)AN is capable of forwarding (or can or needs to forward) the first NAS message to the SMF, or may first determine, before receiving the first message (for example, in a registration procedure), whether the (R)AN is capable of forwarding (or can or needs to forward) the NAS message to the SMF, or determine a type of NAS message that can be forwarded to the SMF, and after receiving the first message, directly forward the first NAS message to the first SMF (for example, perform step S502) or do not forward the first NAS message to the first SMF based on a previously obtained determining result.

In a possible implementation, the (R)AN may obtain or receive at least one of the first information, the second information, and/or the third information from a registration function network element. For ease of description, an example in which the registration function network element is an AMF is used below.

Before the (R)AN sends a second message to the first SMF, the (R)AN may send an access request message to an AMF with which the terminal device is registered. The access request message is used to request to connect the terminal device to the AMF (or request to connect the terminal device to the network), and the access request message may include an identifier of the terminal device (where the identifier may be a permanent identifier or a temporary identifier of the terminal device). After receiving the access request message, the AMF returns a third message to the (R)AN. The third message is a response message of the access request message or an initial context setup request message (INITIAL CONTEXT SETUP REQUEST MESSAGE). The third message includes at least one of the first information, the second information, or the third information. The AMF is the AMF with which the terminal device is registered or an AMF that is responsible for access management of the terminal device. It may be understood that the access request message herein may be an initial (initial) access request message, that is, an access request message initiated by the terminal device for the first time, for example, a registration request message or an initial terminal message (INITIAL UE MESSAGE), or may not be an initial access request message (for example, an access request message initiated by the terminal device in an idle state). This is not limited in this application.

Example 1: A session establishment scenario is used as an example. The first NAS message is used to request to establish the first session. For example, the first NAS message is a session establishment request message (for example, PDU Session Establishment Request Message). The first NAS message includes the identifier of the first session.

In a registration procedure of the terminal device (where the registration procedure occurs before the (R)AN receives the first message from the terminal device), the (R)AN may receive at least one of the first information, the second information, or the third information from the registration function network element. Specifically, the terminal device sends an AN message to the (R)AN, where the AN message includes the access request message (which may also be referred to as a registration request message). The (R)AN sends the access request message to the AMF, and the AMF receives the access request message. The AMF sends a response message (that is, the third message, for example, a registration accept message) of the access request message to the (R)AN. The (R)AN receives the response message, where the response message includes at least one of the first information, the second information, and/or the third information.

Example 2: A session activation scenario is used as an example. The first NAS message is used to request to activate the first session. The first NAS message may be a service request message (for example, a Service Request Message) or a session activation request message (for example, a PDU Session Activation Message). The first NAS message includes the identifier of the first session.

In the session activation scenario, the terminal device may directly initiate a service request procedure, or may first initiate an access procedure and then initiate the service request procedure.

When the terminal device directly initiates the service request procedure, after the (R)AN receives the first message from the terminal device, the (R)AN first sends the access request message (which may also be referred to as an access notification message or the like) to the AMF, and the (R)AN receives the third message from the AMF, where the third message is a response message of the access request message. After determining that the terminal device accesses the AMF (or the network), the (R)AN continues the activation procedure of the first session.

When the terminal device first initiates the access procedure and then initiates the service request procedure, before sending the first message, the terminal device first sends a fourth message to the (R)AN, where the fourth message includes a second NAS message, and the second NAS message is used to request to access the network or activate a control plane connection. After receiving the fourth message, the (R)AN sends the access request message (which may also be referred to as the access notification message) to the AMF based on the fourth message, where the access request message includes the second NAS message. After receiving the fourth message, the AMF returns the third message to the (R)AN. The (R)AN receives the third message, where the third message is the response message of the access request message, and the (R)AN forwards the response message to the terminal device. After the terminal device accesses the network or the control plane connection is activated, the terminal device sends the first message to the (R)AN.

The AMF with which the terminal device is registered may send an identifier (for example, an AMF ID) of the AMF to the (R)AN. For example, the identifier of the AMF is carried in the third message. In this way, the (R)AN can subsequently provide the identifier of the AMF for the first SMF. Alternatively, the AMF with which the terminal device is registered may send an identifier of the AMF to a terminal context information repository function network element (for example, a UDR), so that the first SMF subsequently obtains the identifier of the AMF from the terminal context information repository function network element.

In this embodiment of this application, before the (R)AN forwards the first NAS message to an SMF (that is, the first SMF) corresponding to the first session, the (R)AN needs to first determine the SMF corresponding to the first session, for example, the first SMF.

The following lists several possible implementations.

Manner 1: The (R)AN may obtain, from a selection function network element, identification information of the SMF corresponding to the first session.

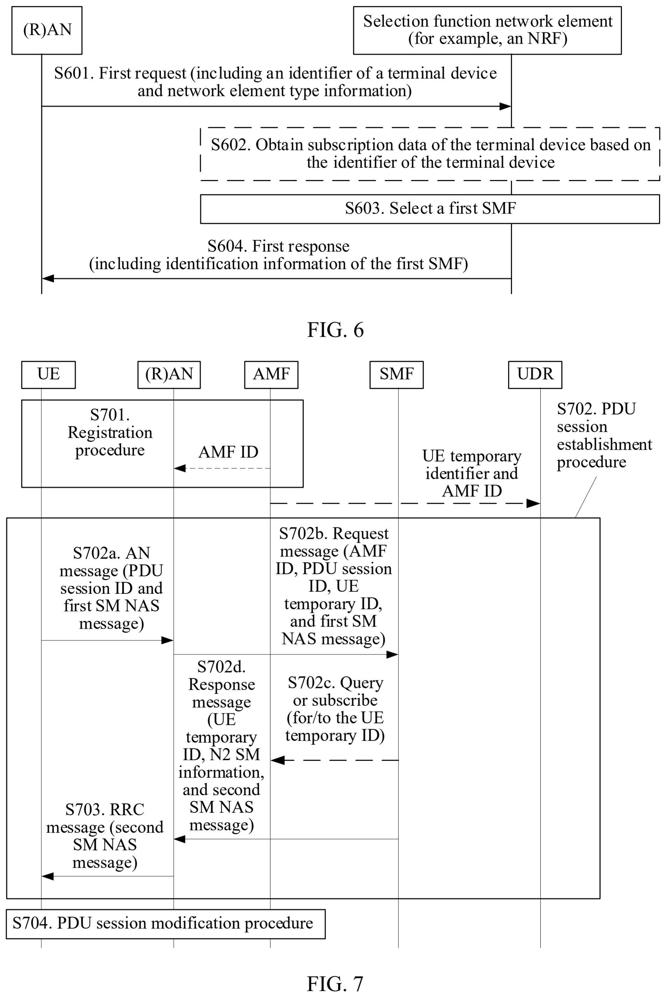

The session establishment scenario is used as an example. Refer to FIG. 6. After receiving the first message from the terminal device and before sending the second message to the first SMF, the (R)AN may further perform steps S601 to S604.

S601. The (R)AN sends a first request to the selection function network element (for example, an NRF), where the first request is used to request to select an SMF for the first session (or the terminal device).

The first request may include the identifier of the terminal device and network element type information, and the network element type information indicates a type of a target core network element that needs to be selected, for example, the SMF. Optionally, the first request may further include a network element selection container. The network element selection container includes session attribute information such as a DNN and S-NSSAI. Correspondingly, the first message may further include the network element selection container. Optionally, the first request may further include the session attribute information such as the DNN and the S-NSSAI. Correspondingly, the first message further includes the session attribute information such as the DNN and the S-NSSAI.

The identifier of the terminal device may be the permanent identifier, or may be the temporary identifier. This is not limited in this embodiment of this application. The temporary identifier may include an identifier allocated by the (R)AN to the terminal device, or an identifier allocated by the registration function network element (for example, the AMF) to the terminal device. If the temporary identifier includes the identifier allocated by the registration function network element to the terminal device, the registration function network element may send the identifier allocated to the terminal device to the (R)AN, so that the (R)AN learns of the temporary identifier of the terminal device. If the temporary identifier includes the identifier allocated by the (R)AN to the terminal device, the (R)AN may send the identifier allocated to the terminal device to the registration function network element, so that the registration function network element learns of the temporary identifier of the terminal device.

S602. This step is a process that may be optionally performed, and the selection function network element may obtain subscription data of the terminal device based on the identifier of the terminal device.

The subscription data of the terminal device may include network element selection subscription data, access and mobility management subscription data, slice selection subscription data, and the like. If the identifier of the terminal device is the temporary identifier, the selection function network element needs to first obtain the permanent identifier corresponding to the temporary identifier, and then obtain the subscription data of the terminal device from the UDM based on the permanent identifier.

S603. The selection function network element selects the first SMF as a target SMF.

The selection function network element determines, based on the network element type information in the first request, to select the SMF network element. Specifically, the network element type information is an SMF network element type.

For example, the selection function network element selects the first SMF as the target SMF based on the subscription data of the terminal device.

For another example, the selection function network element selects the first SMF as the target SMF based on the network element selection container. Specifically, the selection function network element selects, based on the session attribute information such as the DNN and the S-NSSAI included in the network element selection container, the first SMF that is responsible for managing session attributes such as the DNN and the S-NSSAI.

For another example, the selection function network element selects, based on the session attribute information such as the DNN and the S-NSSAI included in the first request, the first SMF that is responsible for managing session attributes such as the DNN and S-NSSAI.

S604. The selection function network element sends a first response to the (R)AN, where the first response includes identification information of the first SMF. Correspondingly, the (R)AN receives the identification information of the first SMF. For example, the identification information of the first SMF may be address information of the first SMF.

Manner 2: The (R)AN may obtain, from the terminal context information repository function network element (for example, the UDR), identification information of the SMF corresponding to the first session.

The session activation scenario is used as an example. After the first session is created, the first SMF or the (R)AN may send the identification information of the first SMF and an identifier of the first session to a network repository function network element, and the network repository function network element correspondingly stores the identification information of the first SMF and the identifier of the first session. Subsequently, when the terminal device activates the first session, the (R)AN may obtain or query for, based on the identifier of the first session, the SMF corresponding to the first session from the terminal context information repository function network element. For example, the (R)AN sends a second request to the terminal context information repository function network element, where the second request is used to query for the SMF corresponding to the first session, and the second request includes the identifier of the first session. The terminal context information repository function network element determines the identification information of the first SMF based on the identifier of the first session, and sends a second response to the (R)AN, where the second response includes the identification information of the first SMF. The (R)AN receives the second response from the terminal context information repository function network element.

Manner 3: The terminal device sends identification information of the first SMF to the (R)AN, and the (R)AN receives the identification information of the first SMF sent by the terminal device.

The session activation scenario is used as an example. When the first session is created, the first SMF or the (R)AN may send the identification information of the first SMF to the terminal device, and the terminal device stores the identification information of the first SMF. Subsequently, when activating the first session, the terminal device may send the identification information of the first SMF. For example, the identification information of the first SMF is carried in the first message.

Certainly, the foregoing several manners in which the (R)AN obtains the identification information of the first SMF are merely examples, and are not actually limited thereto.

It may be understood that, in the session activation scenario, the terminal device may request to activate one session at a time, or may request to activate a plurality of sessions. Specifically, the first message may include an identifier of at least one session and at least one NAS message, the at least one NAS message is in one-to-one correspondence with the at least one session, a NAS message corresponding to the first session in the at least one session is used to request to establish or activate the first session, and the first session is any one of the at least one session.

When the terminal device requests to activate the plurality of sessions, the terminal device may send, for each session, an identifier and a NAS message corresponding to the session to the (R)AN. For example, if the terminal device requests to activate a session A, a session B, and a session C, the first message may include an identifier of the session A and a NAS message A (where the NAS message A is used to request to activate the session A), an identifier of the session B and a NAS message B (where the NAS message B is used to request to activate the session B), and an identifier of the session C and a NAS message C (where the NAS message C is used to request to activate the session C).

In some embodiments, in a process of establishing each session, an SMF corresponding to the session may deliver identification information of the SMF to the terminal device. Correspondingly, the terminal device receives and stores identification information from each of at least one SMF. The terminal device includes, in the first message, identification information of an SMF corresponding to each of the at least one session.

When the terminal device requests to activate the plurality of sessions, a method performed by the network on each session is similar to a method performed on the first session, and details are not described herein again.

S502. The (R)AN sends the second message to the first SMF, and the first SMF receives the second message, where the second message includes the first NAS message and the identifier of the terminal device.

The (R)AN may send the second message to the first SMF based on the identification information of the first SMF. The identifier of the terminal device in the second message may be the permanent identifier or the temporary identifier of the terminal device.

The second message may further include the identifier of the first session, or may further include the identifier of the AMF. For example, the (R)AN includes, in the second message, the AMF ID obtained from the third message, and sends the second message to the first SMF.

It may be understood that when the terminal device requests to activate the plurality of sessions, the (R)AN may send, for each session, the second message to an SMF corresponding to the session.

For example, the second message is an NG application protocol (NG application protocol, NGAP) message or a service-oriented message (for example, an Nsmf_PDUSession_CreateSMContext Request).

With reference to the foregoing examples, the first message includes the identifier of the session A and the NAS message A, the identifier of the session B and the NAS message B, the identifier of the session C and the NAS message C. The session A corresponds to an SMF-A, the session B corresponds to an SMF-B, and the session C corresponds to an SMF-C. In this case, the (R)AN may respectively send second messages to the SMF-A, the SMF-B, and the SMF-C. The second message sent to the SMF-A includes the NAS message A, the second message sent to the SMF-B includes the NAS message B, and the second message sent to the SMF-C includes the NAS message C. It may be understood that when a plurality of NAS messages correspond to a same SMF, the (R)AN may include the plurality of NAS messages in a same message for sending, or may include the plurality of NAS messages in different messages for sending. This is not limited in this embodiment of this application.

S503. The first SMF accepts or rejects the first NAS message based on the mobility restriction information of the terminal device.

It may be understood that when the first NAS message is used to request to establish the first session, that the first SMF accepts the first NAS message means accepting establishment of the first session. Correspondingly, the first SMF performs a procedure related to establishment of the first session, for example, configures a control plane resource for the first session (for example, the first SMF creates a context of the first session), and configures a user plane resource for the first session (for example, selects a PCF, establishes a session management policy, selects a UPF, and establishes an N4 session). For details, refer to related procedures of S203 to S217 shown in FIG. 2.

When the first NAS message is used to request to activate the first session, that the first SMF accepts the first NAS message means accepting activation of the first session. Correspondingly, the first SMF performs a procedure related to activation of the first session, for example, activates a control plane resource for the first session (for example, the first SMF updates a context of the first session), and configures a user plane resource for the first session (for example, selects a new UPF and establishes a new N4 session). For details, refer to related procedures of S305 to S310 shown in FIG. 3.

In this embodiment of this application, the mobility restriction information includes but is not limited to at least one of the following:
(1) Fourth information, where the fourth information indicates that the terminal device is located in the allowed area or the non-allowed area.
   Specifically, when the first SMF determines, based on the fourth information, that the terminal device is not located in the allowed area or is located in the non-allowed area, the first SMF rejects the first NAS message. When the first SMF determines, based on the fourth information, that the terminal device is located in the allowed area or is not located in the non-allowed area, the first SMF may accept the first NAS message.
(2) Fifth information, where the fifth information indicates an allowed area or a non-allowed area of the terminal device.

Specifically, the first SMF may determine, based on the location information of the terminal device and the fifth information, whether the terminal device is located in the allowed area and/or the non-allowed area. When the first SMF determines that the terminal device is not located in the allowed area or is located in the non-allowed area, the first SMF rejects the first NAS message. When the first SMF determines that the terminal device is located in the allowed area or is not located in the non-allowed area, the first SMF may accept the first NAS message. The first SMF may obtain the location information of the terminal device from the AMF. Alternatively, the first SMF obtains the location information of the terminal device based on the second message. For example, the second message includes the location information of the terminal device, or the second message includes an identifier of the (R)AN, and the first SMF obtains the location information of the terminal device based on the identifier of the (R)AN.

In some embodiments, the allowed area or the non-allowed area may be further associated with a data network and/or a network slice of the terminal device. For example, the second message further includes an identifier of the data network and/or an identifier of the network slice, or the first NAS message in the second message includes an identifier of the data network and/or an identifier of the network slice. The identifier of the data network indicates a data network used by the terminal device, the identifier of the network slice indicates a network slice used by the terminal device, and the fifth information indicates an allowed area or a non-allowed area of a terminal device corresponding to the data network and/or the network slice. When the first SMF determines, based on the location information of the terminal device and the fifth information, that the terminal device is not located in the allowed area or is located in the non-allowed area, the first SMF rejects the first NAS message. When the first SMF determines, based on the location information of the terminal device and the fifth information, that the terminal device is located in the allowed area of the terminal device corresponding to the data network and/or the network slice included in the second message or the first NAS message, or the first SMF determines, based on the location information of the terminal device and the fifth information, that the terminal device is not located in the non-allowed area of the terminal device corresponding to the data network and/or the network slice included in the second message or the first NAS message, the first SMF may accept the first NAS message; otherwise, the first SMF may reject the first NAS message.

(3) Sixth information, where the sixth information indicates an allowed radio access technology or a non-allowed radio access technology.

Specifically, the allowed radio access technology is a radio access technology that is allowed to be used when the terminal device accesses a network, and the non-allowed radio access technology is a radio access technology that is not allowed to be used when the terminal device accesses a network. Because the terminal device accesses the network through the (R)AN, when a radio access technology of the (R)AN belongs to the allowed radio access technology, or a radio access technology of the (R)AN does not belong to the non-allowed radio access technology, the first SMF may accept the first NAS message; otherwise, the first SMF rejects the first NAS message.

It may be understood that, when the mobility restriction information includes at least two of the foregoing items, the first SMF accepts the first NAS message only when each of the at least two items satisfies a corresponding restriction condition, or if any one of the at least two items does not satisfy a corresponding restriction condition, the first SMF rejects the first NAS message.

For example, when the terminal device is located in the allowed area and the radio access technology of the (R)AN belongs to the allowed radio access technology, the first SMF accepts the first NAS message. When the terminal device is located in the allowed area but the radio access technology of the (R)AN belongs to the non-allowed radio access technology, or when the radio access technology of the (R)AN belongs to the allowed radio access technology but the terminal device is located in the non-allowed area, or when the terminal device is located in the non-allowed area and the radio access technology of the (R)AN belongs to the non-allowed radio access technology, the first SMF rejects the first NAS message.

It may be understood that the foregoing several types of mobility restriction information are merely examples, and are not actually limited thereto.

In some embodiments, the first SMF may obtain (for example, subscribe to or query for) the mobility restriction information of the terminal device from the AMF based on the identifier of the AMF. The AMF is an AMF with which the terminal device is registered or an AMF that is responsible for access management of the terminal device. If the second message includes the identifier of the AMF, the first SMF may directly obtain the mobility restriction information of the terminal device from the AMF based on the identifier of the AMF in the second message; or if the second message does not include the identifier of the AMF, the first SMF may obtain the identifier of the AMF from the terminal context information repository function network element based on the identifier of the terminal device, where the terminal context information repository function network element stores a correspondence between the identifier of the AMF and the identifier of the terminal device. For example, the identifier of the terminal device in the second message is the temporary identifier, and the first SMF obtains the identifier of the AMF from the terminal context information repository function network element based on the temporary identifier of the terminal device. For another example, the identifier of the terminal device in the second message is the temporary identifier, and the first SMF first obtains the permanent identifier of the terminal device based on the temporary identifier of the terminal device, and then obtains the identifier of the AMF from the terminal context information repository function network element based on the permanent identifier of the terminal device.

In some other embodiments, the first SMF may obtain (for example, subscribe to or query for) the mobility restriction information of the terminal device from the terminal context information repository function network element (for example, the UDR) based on the identifier of the terminal device.

For example, the terminal context information repository function network element stores context data of the terminal device, and the context data includes the mobility restriction information. The first SMF sends a query request to the terminal context information repository function network element, where the query request includes the identifier of the terminal device, and the query request is used to request to obtain the context data of the terminal device. The terminal context information repository function network element returns the context data of the terminal device to the first SMF based on the identifier of the terminal device; and the first SMF determines the mobility restriction information of the terminal device from the context data. For example, the identifier of the terminal device in the second message is the temporary identifier, and the query request includes the temporary identifier of the terminal device. For another example, the identifier of the terminal device in the second message is the temporary identifier, and the first SMF first obtains the permanent identifier of the terminal device based on the temporary identifier of the terminal device, where the query request includes the permanent identifier of the terminal device.

In some embodiments, that the first SMF accepts the first NAS message may further include: The first SMF sends a third NAS message to the (R)AN, where the third NAS message indicates the first SMF to accept the first NAS message, and the (R)AN forwards the third NAS message (which is, for example, carried in an RRC message) to the terminal device. The third NAS message is, for example, a PDU session create context response (Nsmf_PDUSession_CreateSMContext Response) or a PDU session update context response (Nsmf_PDUSession_UpdateSMContext Response).

That the first SMF rejects the first NAS message may further include: The first SMF sends a fourth NAS message to the (R)AN, where the fourth NAS message indicates the first SMF to reject the first NAS message, and the (R)AN forwards the fourth NAS message (which is, for example, carried in an RRC message) to the terminal device. The fourth NAS message is, for example, a PDU session creation context failure (Nsmf_PDUSession_CreateSMContext Failure) message or a PDU session update context failure (Nsmf_PDUSession_UpdateSMContext Failure) message.

It should be noted that the foregoing describes a specific implementation method for directly exchanging a NAS message between the (R)AN and the SMF by using an example in which the (R)AN is directly connected to the SMF through a service-oriented interface. During actual application, the (R)AN may be further directly connected to another core network element (for example, a UPF, a PCF, or an NRF) through a service-oriented interface, so that the (R)AN and the another core network element directly exchange a NAS message.

In this embodiment of this application, the (R)AN is directly connected to the core network element (for example, the SMF), so that the (R)AN and the core network element (for example, the SMF) directly exchange a message without forwarding by the AMF, to improve management and control efficiency of a network session related procedure.

To better understand the technical solutions in embodiments of this application, the following lists several complete examples.

Example 1: FIG. 7 is a flowchart of a session establishment method according to an embodiment of this application. An example in which an AMF performs access registration management and mobility management is used in the method. The method includes the following steps.

S701. Perform a terminal device registration procedure.

In the terminal device registration procedure, a (R)AN may obtain, from a selection function network element (for example, an NRF), an AMF selected by a network for a terminal device.

The AMF or the (R)AN may allocate a temporary identifier (for example, a UE temp ID) to the terminal device. The UE temp ID is used to identify the terminal device by the (R)AN and the core network element.

In a possible implementation, the AMF may send mobility restriction information to the terminal device. The mobility restriction information includes an allowed area and/or a non-allowed area. When the terminal device UE is in the allowed area, the terminal device UE is allowed to initiate a PDU session related service. In another possible implementation, the AMF may notify the (R)AN that the terminal device is in the allowed area or the non-allowed area. Alternatively, the AMF sends a mobility restriction list (Mobility Restriction List) to the (R)AN. The list includes information about a service allowed area or a service non-allowed area, and the (R)AN determines, based on the list, that the terminal device is in the allowed area or the non-allowed area.

If the terminal is in the non-allowed area, the (R)AN determines not to forward a specific type of NAS message (for example, the (R)AN is preconfigured with a specific type of NAS message that the (R)AN does not forward or forwards when the terminal is in the non-allowed area). For example, the (R)AN determines not to forward an SM NAS message (and does not request the NRF to discover an SMF). For another example, the (R)AN may forward a Policy NAS message to a PCF network element.

In a possible implementation, the AMF may determine a type of a NAS message that the (R)AN forwards or does not forward. For example, the AMF determines, based on that the terminal is in the non-allowed area, an SM NAS message that the (R)AN does not forward, and the AMF provides, for the (R)AN, information about a type of a NAS message to be forwarded or not to be forwarded.

Optionally, the AMF may further send an AMF ID (for example, an AMF IP address) to the (R)AN; or the AMF sends an AMF ID and a UE temp ID to the UDR.

S702. Perform a PDU session establishment procedure, including S702a to S702d.

S702a. The terminal device sends an AN message to the (R)AN, and the (R)AN receives the AN message from the UE, where the AN message includes a PDU session ID (corresponding to the foregoing identifier of the first session) and a first SM NAS message (corresponding to the foregoing first NAS message).

The (R)AN may further perceive a type of the first SM NAS message. The (R)AN initiates a request to the NRF, the NRF selects an SMF, and the NRF sends an identifier (for example, an SMF ID) of the selected SMF to the (R)AN. The (R)AN stores a correspondence between the PDU session ID and the SMF ID (where the SMF is responsible for managing a PDU session).

The first SM NAS message may be a PDU Session Establishment Request message, and the message may include a PDU session ID, a Requested DNN, a Requested PDU Session Type, a Requested SSC mode, and the like.

S702b. The (R)AN sends a request message (corresponding to the foregoing second message) to the SMF, to request a connection.

When the AMF sends the AMF ID (for example, the AMF IP address) to the (R)AN in S701, the request message may include a PDU Session ID, a UE temp ID, a first SM NAS message, and an AMF ID. Optionally, when the AMF changes, the (R)AN further notifies the SMF of a new AMF ID.

When the AMF sends the AMF ID and the UE temp ID to a UDR in S701, the request message may include a PDU Session ID, a UE temp ID, and a first SM NAS message. Subsequently, the SMF may send the UE temp ID to the UDR, and the UDR determines the AMF ID based on the UE temp ID and sends the AMF ID to the SMF. Optionally, when the AMF changes, the UDR further notifies the SMF of a new AMF ID.

After receiving the request message, the SMF may obtain subscription data of the terminal from a UDM based on the UE temp ID, and determine, based on the subscription data and information in the first SM NAS message, whether to accept PDU session establishment.

S702c. The SMF queries the AMF or subscribes to the AMF, based on the UE temp ID and the AMF ID, whether the terminal is in the Allowed Area. If the terminal is in the Non-allowed area, the SMF rejects the PDU session establishment. If the terminal is in the Allowed area, the SMF accepts the PDU session establishment.

It may be understood that S702c is an optional step.

In some embodiments, the DNN that may be included in the first SM NAS message corresponds to a local service, and the SMF may query the AMF whether the terminal is in an LADN. If the terminal is not in the LADN, the SMF rejects the PDU session establishment. If the terminal is in the LADN, the SMF accepts the PDU session establishment.

In some embodiments, the SMF may further page the terminal device in an idle state based on the AMF ID.

It may be understood that, after receiving the first SM NAS message, the SMF may refer to the PDU session establishment procedure shown in FIG. 2. For example, the SMF further performs S204, S207a, S207b, S208, S209, S210, and the like.

S702d. The SMF sends a response message to the (R)AN, where the response message may include a UE temp ID, N2 SM info, and a second SM NAS message.

The N2 SM info may include a PDU Session ID, a QoS flow identifier QFI, a QoS profile QoS Profile, CN Tunnel Info, and the like. The second SM NAS message may be a PDU Session Establishment Accept message, and includes a QoS Rule, QoS parameters, IP address information, and the like. The (R)AN configures a radio air interface resource of the terminal device based on the N2 SM info, and sends the second SM NAS message to the terminal device. The (R)AN then sends the PDU Session ID, the AN Tunnel Info, and QoS flows accepted for establishment to the SMF.

S703. After receiving the response message, the (R)AN sends an RRC message to the terminal device, where the RRC message may include the second SM NAS message.

For example, the (R)AN sends, based on the UE temp ID in the response message, the RRC message to the terminal device corresponding to the UE temp ID.

S704. Perform a PDU session modification procedure.

In this procedure, the (R)AN (or the terminal device) directly interacts with the SMF without participation of the AMF. For a PDU session modification procedure initiated by the terminal device, the terminal device sends the PDU Session ID and a third SM NAS message to the (R)AN, the (R)AN sends the UE temp ID and the third SM NAS message to the corresponding SMF based on the PDU session ID, and then the SMF sends the N2 SM info and the third SM NAS message to the (R)AN. For a PDU session modification procedure initiated by the SMF, the SMF sends the UE temp ID and the N2 SM info to the (R)AN.

In addition, the network may further perform status management. For example, after the terminal device enters an idle state, the (R)AN actively releases a connection to the AMF/SMF, or the AMF notifies each SMF, and the AMF and the SMF actively release connection services with the (R)AN.

In the foregoing solution, the AMF performs access registration management and mobility management. The (R)AN determines, based on AMF configuration information (for example, a Mobility Restriction List) or information about a type of a NAS message to be forwarded or not to be forwarded, whether to directly send the SM NAS message to the SMF. The SMF learns of the AMF ID from the (R)AN or the UDR, queries the AMF for location information of the terminal device (which is, for example, whether the terminal device is located in the Allowed Area or the LADN), and determines whether to accept the PDU session establishment. This solution can improve flexibility and management and control efficiency of the PDU session establishment procedure.

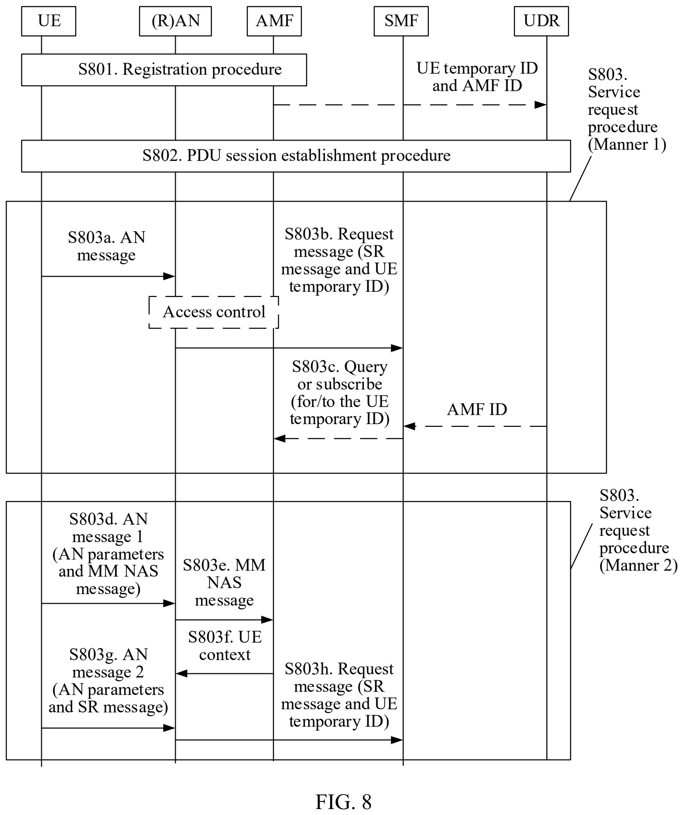

Example 2: FIG. 8 is a flowchart of a service request method according to an embodiment of this application. An example in which an AMF performs access registration management and mobility management is used in the method. The method includes the following steps.

S801. For a specific implementation of a terminal device registration procedure, refer to S701.

S802. For a specific implementation of a PDU session establishment procedure, refer to S702.

S803: Perform an uplink service request (SR) procedure. S803 includes the following two implementations.

Manner 1: Refer to S803a to S803c.

S803a. The terminal device sends an AN message to a (R)AN, and the (R)AN receives the AN message.

The AN message includes AN parameters and [PDU session ID, SR message]. The AN parameters may include a 5G-S-TMSI. [PDU session ID, SR message] indicates that each PDU session identifier is associated with one SR message. SR=Service Request. The SR message includes an identifier (PDU session ID) of a PDU session to be activated and a PDU session status (PDU Session status). It may be understood that the PDU session ID corresponds to the foregoing first NAS message, and the SR message corresponds to the foregoing first NAS message. It may be understood that the SR message may be replaced with another message that may be used to activate the PDU session, for example, a PDU session activation message (PDU Session Activation message).

Optionally, in the PDU session establishment procedure, the SMF may send a UE temp ID, the PDU session ID, and an SMF ID to a UDR. After receiving the AN message, the (R)AN may obtain, from the UDR, an SMF ID corresponding to [UE temp ID, PDU session ID].

S803b. The (R)AN sends a request message (corresponding to the foregoing second message) to each SMF, where the request message includes the SR message and the UE temp ID.

The following lists several specific implementations for S803a to S803b.

Implementation 1: The RAN sends an access notification/request to the AMF (that is, the AMF performs access control). If the AMF allows terminal access, the (R)AN obtains the SMF ID from the UDR and sends the request message to the SMF. The SMF obtains an AMF ID from the UDR based on the UE temp ID. In 801, the AMF sends the AMF ID and the UE temp ID to the UDR, and the UE temp ID may be a 5G-S-TMSI. Optionally, if the UE temp ID is not the 5G-S-TMSI, the AMF sends the UE temp ID to the (R)AN after allowing terminal access.

Implementation 2: The (R)AN sends an access notification/request to the AMF (that is, the AMF performs access control). If the AMF allows terminal access, the (R)AN obtains the SMF ID from the UDR and sends the request message to the SMF. The (R)AN further sends an AMF ID to the SMF. If the UE temp ID is not a 5G-S-TMSI, the (R)AN receives the UE temp ID and the AMF ID from the AMF. If the UE temp ID is a 5G-S-TMSI, the (R)AN receives the AMF ID from the AMF.

Implementation 3: The (R)AN does not send an access notification/request to the AMF, and the (R)AN sends the request message to the SMF. The message further includes an AMF ID. If the UE temp ID is not a 5G-S-TMSI, the (R)AN obtains the AMF ID and the UE temp ID from the UDR based on the 5G-S-TMSI, and correspondingly, in S801, the AMF sends the 5G-S-TMSI, the UE temp ID, and the AMF ID to the UDR. If the UE temp ID is a 5G-S-TMSI, the (R)AN obtains the AMF ID from the UDR based on the 5G-S-TMSI, and correspondingly, in S801, the AMF sends the 5G-S-TMSI and the AMF ID to the UDR.

In these implementations, the SMF may further query, based on the AMF ID, whether the AMF allows terminal device access.

Implementation 4: The (R)AN sends an access notification/request to the AMF (that is, the AMF performs access control). The AMF notifies the (R)AN that the terminal is in an allowed area/a non-allowed area. Alternatively, the AMF sends a Mobility Restriction List to the (R)AN. The (R)AN determines that the terminal is in an allowed area/a non-allowed area based on the Mobility Restriction List. If the terminal is in the non-allowed area, the (R)AN does not send a specific type of NAS message to the NF. If the terminal is in the allowed area, the (R)AN sends a specific type of NAS message to the SMF.

In this implementation, the AMF may indicate, to the (R)AN, a specific type of NAS message that is allowed to be forwarded.

Implementation 5: The (R)AN sends an access notification/request to the AMF (that is, the AMF performs access control). The AMF determines whether the terminal device is in a Service Area Restriction, and stores a result in the UDR. The SMF learns, from the UDR based on the UE temp ID, whether the terminal is in an allowed area/a non-allowed area or an LADN.

S803c. The SMF queries the AMF or subscribes to the AMF, based on the UE temp ID and the AMF ID, whether the terminal is in the Allowed Area. Alternatively, the SMF subscribes to a mobility event (which is, for example, whether the terminal is in the allowed area or inside or outside the LADN) from the AMF based on the UE temp ID and the AMF ID. The UE temp ID and the AMF ID may be further used to page the terminal device in an IDLE state.

It may be understood that S803c is an optional step.

For a procedure after the SMF receives the (R)AN request, refer to a related procedure in FIG. 2.

Manner 2: Refer to S803d to S803h.

S803d. The terminal device first sends an AN message 1 (corresponding to the foregoing fourth message) to the (R)AN, where the message includes AN parameters, and further includes an MM NAS message or a registration request message or an access request message (corresponding to the foregoing second NAS message).

S803e. The (R)AN sends the MM NAS message, the registration request message, or the access request message to the AMF.

S803f. The (R)AN receives the AMF ID/terminal context information (for example, the Mobility Restriction List, or information indicating that the terminal is in the allowed area/non-allowed area) from the AMF.

S803g. The terminal device sends an AN message 2 (corresponding to the foregoing first message) to the (R)AN, where the message includes AN parameters and [PDU session ID, SR message]. The SR message may be replaced with a PDU session activation message (PDU Session Activation message). In this case, the terminal device is already in a connected state, and the (R)AN does not need to send the access notification/request to the AMF.

S803h. The (R)AN sends the request message (corresponding to the foregoing second message) to the SMF, where the request message may include the SR message and the UE temp ID.

With reference to Implementation 1, the (R)AN may obtain the SMF ID from the UDR, and send the SR message to the SMF. The SMF obtains the AMF ID from the UDR based on the UE temp ID.

With reference to Implementation 2 or a terminal device 3, the (R)AN may obtain the SMF ID from the UDR and send the SR message to the SMF, and the (R)AN sends the AMF ID to the SMF.

With reference to Implementation 4, the (R)AN may determine, based on the Mobility Restriction List or allowed area/non-allowed area indication information sent by the AMF, that the terminal is in the allowed area/non-allowed area.

With reference to Implementation 5, after receiving the MM NAS message/a registration message, the AMF may determine whether the terminal device is in the Service Area Restriction, and store the result in the UDR.

In the foregoing solution, the terminal device may send a plurality of SR messages, and each SR message corresponds to one PDU session. After receiving the SR message, the (R)AN obtains the SMF corresponding to the PDU session, and sends the SR message to the SMF. After receiving the SR message, the (R)AN sends the access notification/request to the AMF. If the AMF allows terminal device access, the AMF may send the SR message to the SMF. The terminal device may first send the access request message to the (R)AN, so that the (R)AN obtains context information of the terminal from the AMF. Then, the terminal device sends the SR message to the (R)AN. In this case, the (R)AN does not need to send the access request message to the AMF. This solution can improve flexibility and management and control efficiency of the service request procedure.

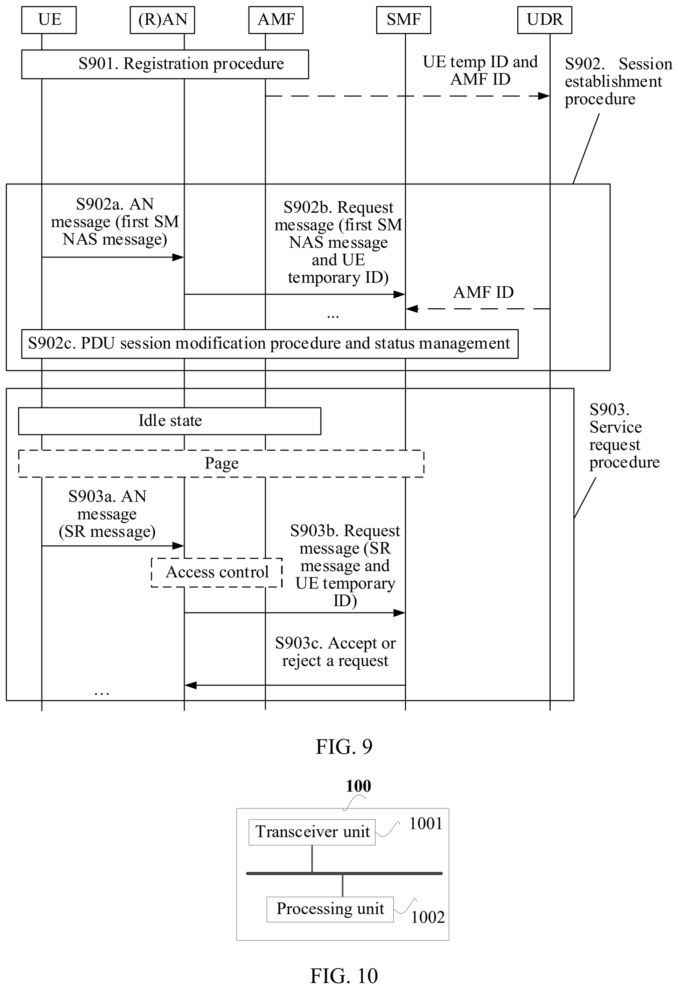

Example 3: FIG. 9 is a flowchart of another session management method according to an embodiment of this application. The method includes a session establishment procedure and a service request procedure. Different from Example 1 and Example 2, in Example 3, an AMF performs access registration management, and mobility management is independently performed by a respective core network element.

S901. For a specific implementation of a terminal device registration procedure, refer to S701.

S902. Perform a PDU session establishment procedure.

S902a. A terminal device sends an AN message (corresponding to the foregoing first message) to a (R)AN, and the (R)AN receives the AN message, where the AN message includes a PDU session ID and a first SM NAS message.

Optionally, the (R)AN perceives a type of the SM NAS message, and requests an NRF to select an SMF. The NRF returns an identifier (for example, an SMF ID) of the selected SMF to the (R)AN. After the (R)AN obtains the SMF ID, the (R)AN stores a correspondence between the PDU session ID and the SMF ID (where the SMF is responsible for managing a PDU session).

S902b. The (R)AN sends a request message (corresponding to the foregoing second message) to the SMF, to request a connection. The request message includes a PDU Session ID, a UE temp ID, and a first SM NAS message. The first SM NAS message may be a PDU Session Establishment Request message, and include a PDU session ID, a Requested DNN, a Requested PDU Session Type, a Requested SSC mode, and the like.

Manner 1: (A DNN/S-NSSAI is not distinguished in a Service Area Restriction): The SMF obtains a Service Area Restriction (for example, an Allowed area and a RAT restriction) from a UDR based on the UE temp ID, and the SMF determines whether a location of the terminal device satisfies the Service Area Restriction, and accepts or rejects the request. For example, if the (R)AN requesting access is in the Allowed area (where the SMF is preconfigured with location information of the (R)AN), the request is accepted. For example, the SMF obtains an AMF ID from the (R)AN or the UDR, obtains location information of the terminal device from the AMF, and accepts the request if the terminal device is in the Allowed area. For example, the SMF receives a connection request (corresponding to terminal access by using a 3GPP RAT) from the (R)AN. If the RAT restriction indicates that access cannot be performed by using the 3GPP RAT, the SMF rejects the request.

Manner 2: (A DNN/S-NSSAI is distinguished in a Service Area Restriction): The SMF obtains, from a UDR based on the UE temp ID, a Service Area Restriction (for example, an Allowed area/a Non-allowed area) corresponding to each DNN/each piece of S-NSSAI, and the SMF determines whether a location of the terminal device satisfies the Service Area Restriction corresponding to the Requested DNN/S-NSSAI, and accepts or rejects the request. For example, if the (R)AN accessed by the terminal device is in the Allowed area corresponding to the Requested DNN/S-NSSAI (where the SMF is preconfigured with location information of the (R)AN), the request is accepted. For example, the SMF obtains an AMF ID from the (R)AN or the UDR, obtains location information of the terminal device from the AMF, and accepts the request if the location of the terminal device is in the Allowed area corresponding to the Requested DNN/S-NSSAI.

S902c. Perform a PDU session modification procedure and status management. For a specific implementation, refer to related descriptions in Example 1.

It may be understood that, as the terminal device moves, if the (R)AN accessed by the terminal device is in the Non-allowed area, the SMF triggers PDU session release. Specifically, a PDU session release request is sent to the (R)AN. The request includes a UE temp ID, a UE PDU Session ID, and a second SM NAS message. The second SM NAS message may be a PDU Session Release message.

When the terminal device needs to perform service transmission, the terminal device initiates a service request to activate a PDU session.

S903. Perform a service request procedure.

S903a. The terminal device sends an AN message (corresponding to the foregoing first message) to the (R)AN, and the (R)AN receives the AN message. The AN message includes AN parameters and [PDU session ID, SR message]. The AN parameters include a 5G-S-TMSI.

Optionally, the (R)AN obtains, from the UDR, an SMF ID corresponding to [UE temp ID, PDU session ID].

S903b. The (R)AN sends a request message (corresponding to the foregoing second message) to each SMF, where the request message includes the SR message and the UE temp ID.

S903c: The SMF determines, based on information about the Service Area Restriction obtained from the UDR, whether the terminal device is in the Service Area Restriction, and accepts or rejects the request accordingly.

For a specific implementation of S903c, refer to Implementation 1, Implementation 2, or Implementation 3 in the foregoing Example 2. Details are not described herein again.

In the foregoing solution, mobility management is independently performed by a respective core network element (for example, the SMF). The respective core network element obtains the Service Area Restriction from the UDR, and determines, based on the location information of the terminal device and the Service Area Restriction, to accept or reject the PDU session establishment or activation request. This can improve flexibility and management and control efficiency of a PDU session related procedure.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus. The apparatus includes a module/unit/means configured to perform the method performed by any network function or entity in the above method embodiments. The module/unit/means may be implemented by software, hardware, or hardware by executing corresponding software.

For example, refer to FIG. 10. An apparatus 100 may include a transceiver unit 1001 and a processing unit 1002.

In an example, when the apparatus 100 is the access network element or is located in the access network element, the transceiver unit 1001 is configured to: receive a first message from a terminal device, where the first message includes an identifier of a first session and a first non-access stratum NAS message, and the first NAS message is used to request to establish or activate the first session corresponding to the identifier; and send a second message to a first session management function network element, where the second message includes the first NAS message and an identifier of the terminal device. Optionally, the processing unit 1002 is configured to determine the second message based on the first message.

In another example, when the apparatus 100 is the first session management function network element or is located in the first session function network element, the transceiver unit 1001 is configured to receive a second message from an access network element, where the second message includes a first NAS message and an identifier of a terminal device, and the first NAS message is used to request to establish or activate a first session; and the processing unit 1002 is configured to accept or reject the first NAS message based on mobility restriction information of the terminal device.

In still another example, when the apparatus 100 is the registration function network element or is located in the registration function network element, the transceiver unit 1001 is configured to: receive an access request message from an access network element, where the access request message is used to request to connect a terminal device to a registration function network element (or a network) in which the apparatus is located; and send a third message to the access network element, where the third message includes at least one piece of information, and the at least one piece of information is used by the access network element to determine whether to forward a first NAS message. Optionally, the processing unit 1002 is configured to determine the third message based on the access request message.

In still another example, when the apparatus 100 is the terminal device or is located in the terminal device, the processing unit 1002 is configured to generate a first message; and the transceiver unit 1001 is configured to send a first message to an access network element, where the first message includes an identifier of at least one session and at least one NAS message, the at least one NAS message is in one-to-one correspondence with the at least one session, and a NAS message corresponding to each of the at least one session is used to request to establish or activate the session.

It should be understood that all related content of the steps in the foregoing method embodiment may be cited in function descriptions of corresponding functional modules. Details are not described herein again.

In specific implementation, the apparatus may have a plurality of product forms. The following describes several possible product forms.

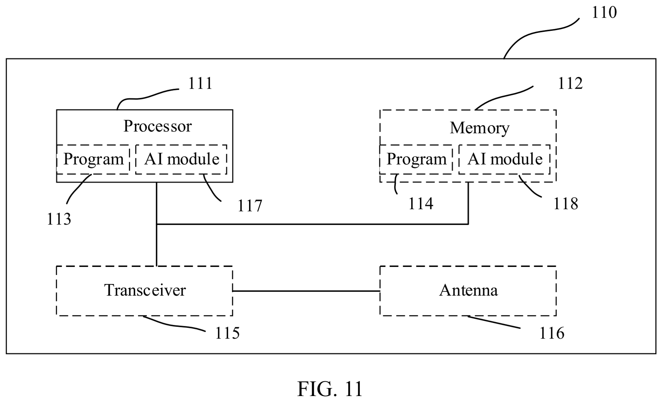

Refer to FIG. 11. An embodiment of this application further provides a communication apparatus 110. It may be understood that the communication apparatus 110 includes technical means (means) of necessary forms, for example, modules, units, elements, circuits, or interfaces, which are appropriately configured together to implement the solution. The communication apparatus 110 may be any network function or entity in the foregoing method embodiments, or may be a component (for example, a chip) in these functions and entities, to implement the method performed by any network function or entity in the foregoing method embodiments.

The communication apparatus 110 includes one or more processors 111. The processor 111 may be a general-purpose processor, a dedicated processor, or the like. For example, the processor may be a baseband processor or a central processing unit. The baseband processor may be configured to process a communication protocol and communication data. The central processing unit may be configured to: control the communication apparatus (for example, a RAN node, a terminal, or a chip), execute a software program, and process data of the software program.

In a possible design, the processor 111 may include a program 113 (which sometimes may also be referred to as code or instructions). The program 113 may run on the processor 111, so that the communication apparatus 110 performs the method performed by any network function or entity in the foregoing method embodiments.

In still another possible design, the communication apparatus 110 includes a circuit (not shown in FIG. 11), and the circuit is configured to implement a function of the method performed by any network function or entity in the foregoing method embodiments.

In specific implementation, the communication apparatus 110 may include one or more memories 112. The memory may store a program 114 (which sometimes may also be referred to as code or instructions). The program 114 may run on the processor 111, so that the communication apparatus 110 performs the method performed by any network function or entity in the foregoing method embodiments.

In some embodiments, the processor 111 and/or the memory 112 may include AI modules 117 and 118, and the AI module is configured to implement AI-related functions. The AI module may be implemented by software, hardware, or a combination of software and hardware. For example, the AI module may include an RIC module. For example, the AI module may be a nearreal-time RIC or a non-real-time RIC.

In specific implementation, the processor 111 and/or the memory 112 may further store data. The processor and the memory may be separately disposed, or may be integrated together.

The communication apparatus 110 may further include a transceiver 115 and/or an antenna 116. The processor 111 sometimes may also be referred to as a processing unit, and controls the communication apparatus (for example, the RAN node or the terminal). The transceiver 115 sometimes may also be referred to as a transceiver unit, a transceiver machine, a transceiver circuit, a transceiver, or the like, and is configured to implement a transceiver function of the communication apparatus through the antenna 116.

It should be understood that the processor mentioned in this embodiment of this application may be implemented by hardware or by software. When the processor is implemented by the hardware, the processor may be a logic circuit, an integrated circuit, or the like. When the processor is implemented by the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate, a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program or the instructions are run on a computer, the method performed by any network function or entity in the foregoing method embodiments is performed.

Based on a same technical concept, an embodiment of this application further provides a computer program product, including instructions. The computer program product stores the instructions. When the instructions are run on a computer, the method performed by any network function or entity in the foregoing method embodiments is performed.

Based on a same technical concept, an embodiment of this application further provides a chip. The chip may include a processor, and may further include a memory (or the chip is coupled to the memory). The processor executes program instructions in the memory, to perform the method performed by any network function or entity in the foregoing method embodiments. "Coupling" means that two components are directly or indirectly combined with each other. For example, coupling may mean an electrical connection between the two components.

A person skilled in the art should understand that embodiments of this application may be provided as a method, a system, or a computer program product. Therefore, this application may use a form of hardware-only embodiments, software-only embodiments, or embodiments combining software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Clearly, a person skilled in the art can make various modifications and variations to this application without departing from the scope of this application. In this way, this application is intended to cover these modifications and variations of this application provided that these modifications and variations fall within the scope of the claims of this application and equivalent techniques thereof.

## Claims

1. A session management method, comprising:
receiving, by an access network element, a first message from a terminal device, wherein the first message comprises an identifier of a first session and a first non-access stratum NAS message, and the first NAS message is used to request to establish or activate the first session corresponding to the identifier; and
sending, by the access network element, a second message to a first session management function network element, wherein the second message comprises the first NAS message and an identifier of the terminal device.

2. The method according to claim 1, wherein before sending, by the access network element, the second message to the first session management function network element, the method further comprises:
receiving, by the access network element, a third message from a registration function network element, wherein the third message comprises at least one piece of information, and the registration function network element is a registration function network element with which the terminal device is registered; and
sending, by the access network element, the second message to the first session management function network element comprises:
sending, by the access network element, the second message to the first session management function network element based on the at least one piece of information.

3. The method according to claim 2, wherein the at least one piece of information comprises first information, and the first information indicates that the terminal device is located in an allowed area or is not located in a non-allowed area, or the first information indicates an allowed area and/or a non-allowed area; and
sending, by the access network element, the second message to the first session management function network element based on the at least one piece of information comprises:
if the terminal device is located in the allowed area or is not located in the non-allowed area, sending, by the access network element, the second message to the first session management function network element.

4. The method according to claim 2, wherein the at least one piece of information comprises second information; and
the second information indicates an allowed message type, and sending, by the access network element, the second message to the first session management function network element based on the at least one piece of information comprises: if the allowed message type comprises a message type corresponding to the first NAS message, sending, by the access network element, the second message to the first session management function network element; or
the second information indicates a non-allowed message type, and sending, by the access network element, the second message to the first session management function network element based on the at least one piece of information comprises: if the non-allowed message type does not comprise a message type corresponding to the first NAS message, sending, by the access network element, the second message to the first session management function network element.

5. The method according to any one of claims 2 to 4, wherein the at least one piece of information comprises third information, and the third information indicates whether the terminal device is allowed to perform access; and
sending, by the access network element, the second message to the first session management function network element based on the at least one piece of information comprises:
if the third information indicates that the terminal device is allowed to perform access, sending, by the access network element, the second message to the first session management function network element.

6. The method according to any one of claims 2 to 5, wherein the third message further comprises an identifier of the registration function network element, and the second message further comprises the identifier of the registration function network element.

7. The method according to any one of claims 1 to 6, wherein the first NAS message is used to request to establish the first session corresponding to the identifier, the first NAS message is a session establishment request message, and the first NAS message comprises the identifier of the first session;
after receiving, by the access network element, the first message from the terminal device and before sending, by the access network element, the second message to the first session management function network element, the method further comprises:
sending, by the access network element, a first request to a selection function network element, wherein the first request is used to request to select a session management function network element for the first session; and
receiving, by the access network element, a first response from the selection function network element, wherein the first response comprises identification information of the first session management function network element; and
sending, by the access network element, the second message to the first session management function network element comprises:
sending, by the access network element, the second message to the first session management function network element based on the identification information of the first session management function network element.

8. The method according to any one of claims 2 to 6, wherein the first NAS message is used to request to establish the first session corresponding to the identifier, the first NAS message is a session establishment request message, and the first NAS message comprises the identifier of the first session; and
before receiving, by the access network element, the first message from the terminal device, the method further comprises:
sending, by the access network element, an access request message to the registration function network element, wherein the third message is a response message of the access request message.

9. The method according to any one of claims 1 to 6, wherein the first NAS message is used to request to activate the first session corresponding to the identifier, the first NAS message is a service request message or a session activation request message, and the first NAS message comprises the identifier of the first session; and
sending, by the access network element, the second message to the first session management function network element comprises:
obtaining, by the access network element, identification information of the first session management function network element; and
sending, by the access network element, the second message to the first session management function network element based on the identification information of the first session management function network element.

10. The method according to claim 9, wherein obtaining, by the access network element, the identification information of the first session management function network element comprises:
sending, by the access network element, a second request to a terminal context information repository function network element, wherein the second request is used to query for a session management function network element corresponding to the first session; and
receiving, by the access network element, a second response from the terminal context information repository function network element, wherein the second response comprises the identification information of the first session management function network element.

11. The method according to claim 9, wherein the first message comprises the identification information of the first session management function network element; and
obtaining, by the access network element, the identification information of the first session management function network element comprises:
obtaining, by the access network element, the identification information of the first session management function network element from the first message.

12. The method according to any one of claims 2 to 6, wherein the first NAS message is used to request to activate the first session corresponding to the identifier, the first NAS message is a service request message or a session activation request message, and the first NAS message comprises the identifier of the first session; and
the method further comprises:
before the access network element receives the third message from the registration function network element, sending, by the access network element, an access request message to the registration function network element, wherein the access request message comprises the identifier of the terminal device, and the third message is a response message of the access request message.

13. The method according to claim 12, wherein sending, by the access network element, the access request message to the registration function network element comprises:
after the access network element receives the first message from the terminal device, sending, by the access network element, the access request message to the registration function network element.

14. The method according to claim 12, wherein before receiving, by the access network element, the first message from the terminal device, the method further comprises: receiving, by the access network element, a fourth message from the terminal device, wherein the fourth message comprises a second NAS message, and the second NAS message is used to request to access a network or activate a control plane connection; and
sending, by the access network element, the access request message to the registration function network element comprises: sending, by the access network element, the access request message to the registration function network element based on the fourth message, wherein the access request message comprises the second NAS message.

15. The method according to any one of claims 9 to 14, wherein the first message comprises an identifier of at least one session and at least one NAS message, the at least one NAS message is in one-to-one correspondence with the at least one session, a NAS message corresponding to the first session in the at least one session is used to request to establish or activate the first session, and the first session is any one of the at least one session; and
sending, by the access network element, the second message to the first session management function network element comprises:
sending, by the access network element, the second message to a session management function network element corresponding to each session.

16. A session management method, wherein the method comprises:
generating, by a terminal device, a first message; and
sending, by the terminal device, the first message to an access network element, wherein
the first message comprises an identifier of at least one session and at least one NAS message, the at least one NAS message is in one-to-one correspondence with the at least one session, and a NAS message corresponding to each of the at least one session is used to request to establish or activate the session.

17. The method according to claim 16, wherein the first message further comprises identification information of at least one session management function network element, the identification information of the at least one session management function network element is in one-to-one correspondence with the at least one session, and each of the at least one session management function network element is responsible for managing a session corresponding to identification information of the session management function network element.

18. The method according to claim 17, wherein the method further comprises:
receiving, by the terminal device form each of the at least one session management function network element, the identification information of the session management function network element.

19. The method according to any one of claims 16 to 18, wherein before sending, by the terminal device, the first message, the method further comprises:
sending, by the terminal device, a fourth message to the access network element, wherein the fourth message comprises a second NAS message, and the second NAS message is used to request to access a network or activate a control plane connection.

20. A communication apparatus, comprising a module or a unit configured to perform the method according to any one of claims 1 to 15 or a module or a unit configured to perform the method according to any one of claims 16 to 19.

21. A communication apparatus, comprising a processor, wherein the processor is coupled to a memory, the memory is configured to store a program or instructions, and when the program or the instructions are executed by the processor, the communication apparatus is caused to perform the method according to any one of claims 1 to 15, or the communication apparatus is caused to perform the method according to any one of claims 16 to 19.

22. A computer-readable storage medium, wherein the storage medium stores a computer program or instructions, and when the computer program or the instructions are executed by a communication apparatus, the method according to any one of claims 1 to 15 is implemented, or the method according to any one of claims 16 to 19 is implemented.

23. A chip, wherein the chip comprises a processor, and the processor is configured to execute program instructions in a memory, to perform the method according to any one of claims 1 to 15, or perform the method according to any one of claims 16 to 19.

24. A communication system, comprising a communication apparatus and a terminal device, wherein
the communication apparatus is configured to perform the method according to any one of claims 1 to 15, and the terminal device is configured to perform the method according to any one of claims 16 to 19.

25. A computer program product comprising instructions, wherein the computer program product stores the instructions, and when the instructions are run on a computer, the computer is caused to perform the method according to any one of claims 1 to 15, or the computer is caused to perform the method according to any one of claims 16 to 19.
